# EUROPEAN PATENT SPECIFICATION

(11) **EP 3 970 399 B1**
(45) Date of publication and mention of the grant of the patent: **10.04.2024**
(21) Application number: 20723887.4
(22) Date of filing: 12.05.2020
(51) Int. Cl.: H04L 9/40, H04W 12/02, H04L 9/06, G06F 21/62

(54) **A COMPUTER-IMPLEMENTED METHOD OF PERFORMING FEISTEL-NETWORK-BASED BLOCK-CIPHER ENCRYPTION OF PLAINTEXT**
COMPUTERIMPLEMENTIERTES VERFAHREN ZUR DURCHFÜHRUNG EINER FEISTEL-NETZWERKBASIERTEN BLOCKCHIFFRIERVERSCHLÜSSELUNG VON KLARTEXT
PROCÉDÉ MIS EN UVRE PAR ORDINATEUR PERMETTANT D'EFFECTUER UN CRYPTAGE À CHIFFREMENT EN BLOCS DE TEXTE EN CLAIR À BASE D'UN RÉSEAU DE FEISTEL

(30) Priority: 13.05.2019 EP 19174176
(43) Date of publication of application: 23.03.2022
(73) Proprietor: PII Guard ApS, 2670 Greve (DK)
(72) Inventor: BOESGAARD, Martin, Staal, 2680 Solrød Strand (DK)
(74) Representative: Inspicos P/S
(86) International application number: PCT/EP2020/063110
(87) International publication number: WO 2020/229436

(56) References cited:
- EP-A1- 1 734 493
- US-A1- 2005 132 070
- US-A1- 2016 247 150
- US-A1- 2018 191 690
- US-B1- 6 189 095
- SCHNEIER BRUCE ET AL: "Unbalanced Feistel networks and block cipher design", 21 February 1996 (1996-02-21), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 121 - 144, XP047294331, ISBN: 978-3-642-17318-9 [retrieved on 2005-06-02] the whole document

## Description

### Technical field

The present invention relates to a computer-implemented method of performing Feistel-network-based block-cipher encryption of plaintext.

### Background of the invention

Block ciphers constitute a known technology for encrypting a block of data. Block ciphers are generally disclosed by Menezes, Alfred J.; Oorschot, Paul C. van; Vanstone, Scott A. (2001). Handbook of Applied Cryptography (Fifth ed.). p. 251. ISBN 978-0849385230, and by M. Liskov, R. Rivest, and D. Wagner. "Tweakable Block Ciphers". Crypto 2002.

A Feistel cipher or Feistel network is a particular kind of block cipher, known *per se.*

Format-preserving encryption is a known technology for encrypting data objects of a given format in order to achieve an encrypted form of the data object respecting the same format as the non-encrypted version.

Format-preserving encryption is generally described in "Format Preserving Encryption" by T. Spies (2008), as available on the filing data of the present patent application at https://pdfs.semanticscholar.org/23fe/f4a9beccb9ef4f064a50eee3366246474bf7.pdf) and "Format-Preserving Encryption" by M. Bellare et al. (2009, as available on the filing data of the present patent application at https://eprint.iacr.org/2009/251.pdf).

Format-preserving encryption has so far typically been used to encrypt identification numbers such as credit card numbers and social security numbers. In the context of known techniques, credit card numbers and social security numbers are characterized in having a fixed size, i.e. always consisting of a predefined number of digits.

US 6,189,095 B1, upon which the preamble of claim 1 is based, discloses a system for a symmetric key block cipher which uses multiple stages with a modified Type-3 Feistel network.

### Summary of the invention

It is an objective of embodiments of the invention to provide a method which allows for encryption of plaintexts of a variable size, i.e. of a size which may be configured to match specific requirements.

In a first aspect the invention provides a computer-implemented method of performing Feistel-network-based block-cipher encryption of plaintext, the method implementing a block cipher algorithm based on two or more of tracks and on one or more S-boxes, the method comprising the steps of:
- splitting the plaintext into plaintext portions, wherein the number of plaintext portions is equal to the number of tracks, wherein each plaintext portion has a portion size, and wherein the sum of all of the portion sizes is equal to the size of the plaintext;
- defining respective initial values of each of the tracks on the basis of respective corresponding plaintext portions;
- iterating the Feistel network a number of times by updating the track values on the basis of one or more S-box outputs;
- combining the respective resulting outputs of each track of the Feistel network to obtain an encrypted version of the plaintext as ciphertext;
wherein:
the block cipher is adjustable to fit the size of the plaintext, wherein the size of the plaintext determines the number of plaintext portions and the size of the individual plaintext portions;
the size of the input for the S-box of each track of the block cipher is at least equal to the portion size of the plaintext portion fed into the S-box, and wherein
the plaintext is not divided prior to the step of splitting the plaintext into plaintext portions, and each plaintext portion is not split further prior to the step of defining respective initial values of each of the tracks and iterating the Feistel network.

It will thus be appreciated that embodiments of the first aspect of the invention provides a computer-implemented method of performing Feistel-network-based block-cipher encryption of plaintext. The method implements a block cipher algorithm based on two or more tracks and on one or more S-boxes. The number of tracks and the size of the individual tracks are selected such that the sum of the track sizes corresponds to the size of the plaintext (the information to encrypt). The method comprises the steps of:
1. The plaintext in split into parts of sizes compatible with the tracks. The information in the plaintext is thus split between the initial values of the tracks.
2. The Feistel network is iterated a number of times. For each iteration, one or more of the values of the tracks are updated as a function of the output of one or more S-boxes.
3. Finally, the values of the tracks are concatenated again in order to form the ciphertext (the encrypted version of the plaintext).

This method is characterized in that the block cipher supports a plurality of block sizes (the block size is typically equivalent to the plaintext size), which classical block ciphers do not. It also allows encryption of numbers within an integer domain whereas classical block ciphers only support encryption of binary data.

The ability to support a configurable block size (binary or integer) is achieved by choosing the number of tracks and the size of the tracks in such a way that the sum of the track sizes corresponds to the block size.

The block cipher may optionally use different S-boxes for different tracks and/or only use parts of the S-boxes if track size is less than S-box size.

The block cipher may optionally be configured where all tracks have the same size. Such design may be simpler compared to a design with different track sizes.

Preferably the block cipher is adjustable to fit the size of the entire plaintext in one single run of the algorithm. In particular, according to the invention, the plaintext is not divided prior to the step of splitting the plaintext into plaintext portions, and each plaintext portion is not split further prior to the step of defining respective initial values of each of the tracks and iterating the Feistel network. In that manner, the entire plaintext affects the encrypted version of the plaintext, whereby even a slight change somewhere in the plaintext results in a change in the entire output of the algorithm. In contrast, if the plaintext would have been divided into segments (one for each execution of the block cipher/encryption) which would subsequently have been split into segment portions for encryption, then a change in one segment would only affect the output of the encryption of that segment but not affect the output resulting from encryption of other segments, which would render the encrypted output less dependent from the plaintext input. It is in many applications important that any change, no matter how small, in the plaintext affects the entire ciphertext in an encrypted version of the plaintext. If for example e-mail addresses to be encrypted each are split into two segments that are encrypted separately, this would result in that all e-mail addresses having the same end portion (or second part), e.g. domain name, in the plaintext would also have the same end in the ciphertext, i.e. encrypted version of the data. This could allow an attacker to identify which persons in an encrypted dataset working in the same organization (because their e-mail address would have the same domain component - also in encrypted form). Thus, security is enhanced by not dividing the plaintext prior to the step of splitting it into plaintext portions. It will be appreciated that enhanced security is accordingly achieved without interfering in the Feistel network iteration, i.e. without modifying the S-box outputs between iteration steps of the Feistel network (e.g. modifying S-box outputs in dependence of data from other data blocks than the one being iterated), and without allowing the ciphertext to have a size larger than the size of the plaintext. In particular when the size of the ciphertext is to have the same size as the plaintext which may be a desirable feature in format-preserving encryption, it may be a general aim to ensure that the ciphertext has the same size as the plaintext. Not interfering in the Feistel network iteration by not modifying S-box outputs between iterative steps increases speed and reduces algorithmic complexity without compromising security thanks to the above features of not splitting the plaintext potions further prior to the step of defining the respective initial values for the tracks.

Not dividing the plaintext prior to the step of splitting the plaintext into plaintext portions and not splitting each plaintext portion further prior to the steps of defining respective initial values of each of the tracks and iterating the Feistel network is particularly beneficial for encryption of comparatively small messages or partial objects of messages, i.e. for amounts of data not exceeding, e.g., 128 bytes. Format-preserving encryption as described and claimed may be of relevance in this context, given that such format-preserving encryption is particularly suitable for encryption of small amounts of data which are typically segments or parts of larger amounts of data or files.

The step of splitting the plaintext into plaintext portions may be carried out such that each plaintext portion has a size which is equal to or less than the predetermined maximum size. The plaintext portions are preferably processed in the tracks, even if some of the plaintext portions have a portion size smaller than the size of the input for the S-box of the block cipher. The method is accordingly not restricted by a fixed, predetermined input size for the S-box, thereby enhancing flexibility.

Herein, the size of the input for the S-box of each track of the block cipher is defined as a predetermined maximum size of data which can be taken by the S-box as its input.

The block cipher may optionally be configured with tracks of different size. Such design may allow for more flexibility with respect to which block sizes are supported.

The input to an S-box may optionally be a function of two or more values, the values may for example consist of values of tracks (same track as output value is written to and/or other track(s)), a value derived from the key, or a value derived from the tweak. Similarly, the output of the S-box may be used as input to a function together with one or more inputs where the result of this function is the next value of the track. The functions used to compute the input to the S-boxes and/or used to compute the output of the S-boxes may rely on for example XOR, addition modulus, or subtraction modulus.

An S-box may optionally contain predefined values and/or values derived from a function. If the values are derived from a function, that function may be a cryptographic algorithm, for example a pseudo-random number generator. If the values are derived from a function, this function may rely on one or more inputs, whereof one or more of these inputs may be the key, the tweak, or the plaintext size.

In one embodiment of the present invention, an S-box is used where the input size of the S-box is larger than the size of the input. The S-box input size may be an integer factor times the size of the input for an integer-based cipher. This integer factor may be a power of two. The S-box input size may be a number of bits larger than the input for a binary cipher. This may allow one S-box to be used for different input sizes and thus reduce the need for different S-boxes.

In one embodiment of the present invention, an S-box is used where the output size is larger than the size of the destination track whereto the resulting value is to be stored. The larger size may for example be addressed by applying a modulus operation on the S-box output, by ignoring one or more bits of the S-box output, and/or by using a surjective (i.e. many-to-fewer) function or operation. The S-box output may be an integer factor times the size of the destination track for an integer-based cipher. This integer factor may be a power of two. The S-box output may be a number of bits larger that the size of the destination track for a binary cipher. This may allow one S-box to be used for different output sizes and thus reduce the need for different S-boxes.

In one embodiment of the present invention, an S-box has an input size and another output size. This may for example allow for a track of one size to be used as input and for the output to be applied to a track of another size.

In one embodiment of the present invention, the same S-box is used for all S-box operations.

In one embodiment of the present invention, two of more different S-boxes are used. If two or more S-boxes are used, each S-box may be used for one or more input tracks/output track combinations.

In one embodiment of the present invention, the track sizes of an integer-based cipher are determined by factoring the integer domain size of the input. The resulting factors are then distributed between the tracks and multiplied for each track to achieve the individual track sizes.

In one embodiment of the present invention, the track sizes on a binary-based cipher are determined by assigning sized to each individual track such that the sum of the track sizes measured in bits is the size of the ciphertext measured in bits.

In one embodiment of the present invention, one or more subkeys are defined. These one or more subkeys may for example be a function of a key, a tweak, the plaintext size, the ciphertext size, the block size, or any combination thereof. These one or more subkeys are applied to one or more S-box operations using for example an XOR, addition modulus, or subtraction modulus operation. There may be several advantages using subkeys in this way, for example that the encryption algorithm can be heavily dependent on the values the subkey is generated from (e.g. key, tweak, or size(s)), such that even a small change to any of these completely will change how the algorithm will encrypt a value, and that in the case that the S-box has a greater input size compared to its input value, this application of a subkey may facilitate that more or all of the values of the S-box may be addressable by in S-box input.

In one embodiment of the present invention, one or more subkeys are defined. These one or more subkeys are applied to the output of the S-box operations using for example XOR, addition modulus, or subtraction modulus operation. A potential advantage of such subkey application could be to reduce the effect of an eventual bias in the output of the S-box in case the output of the S-box is of another domain size than the destination track. Such bias will typically occur if the domain size of the S-box is not an integer (1, 2, 3, ...) times the domain size of the destination track.

In one embodiment of the present invention, the round key is composed of two parts; one part is generated once for a number of encryption operations and the other part is generated uniquely for each encryption operation. The two parts are joined (e.g. using an XOR, addition modulus or subtraction modulus operation) in order to create the round keys. One advance of round keys composed of two parts is that the expensive work can be performed once for several encryption operations, yet, the round keys can be unique for each encryption operation. Thus, performance is improved.

In one embodiment of the present invention, the plaintext size, the ciphertext size, and the block size are equal.

In one embodiment of the present invention, the block and/or ciphertext has a larger size than the plaintext. This is acceptable in some applications and gives a larger freedom when it comes to designing the algorithm and/or when it comes to defining the size. For example, if the plaintext has a size not supported as block size by the block cipher, a slightly larger size, which is supported by the block cipher, may be used.

In one embodiment of the present invention, an integer domain plaintext is increased in size to or decreased in size into a power of two; the cipher is then configured as a binary cipher where the size in bits is log₂ of the integer domain size.

In one embodiment of the present invention, the block and/or ciphertext has a smaller size than the plaintext. This may be achieved by reducing the plaintext size e.g. by making some plaintext values non-supported. For example, if the plaintext represents social security numbers and it is known that some values have never been assigned in real life, some or all of these non-assigned values may be excluded from the supported plaintext values whereby the plaintext size is reduced. This method may for example be used in case the cipher cannot support the particular plaintext size as block size but a smaller block size is supported.

In one embodiment of the present invention, the tweak (either alone or combined with other information, such as key, block size, and/or a constant) is processed by a hash function as part of the process of generating sub keys. One potential advantage of a construction utilizing a hash function is that it allows for varied formats of tweak; it does no longer need to be subject to e.g. size restrictions.

In one embodiment of the present invention, the method according to the first aspect of the invention comprises:
- providing an input file;
- identifying within the input file at least one data object for encryption and an amount of data which is not for encryption;
- defining the at least one data object as said plaintext for encryption according to any of the preceding claims;
subsequent to the step of combining the respective resulting outputs of each track of the Feistel network to obtain an encrypted version of the plaintext as ciphertext:
- generating an output file comprising the amount of data not for encryption in its original non-encrypted format and the ciphertext obtained by encryption of the at least one data object, wherein the output file does not include the non-encrypted version of the at least one data object. The ciphertext thus replaces the non-encrypted version of the at least one data object. Preferably, the output file is thereby identical to the input file, except for the replacement of the at least one data object by the encrypted version thereof. The method may therefore comprises the following steps:
- identifying a position, within the input file, of the data object;
- positioning the ciphertext in the output file so that the ciphertext appears at the same position in the output file as the position of the data object in the input file.

The at least one data object may include one or more objects of a predefined format in a database file, text file or any other applicable data file, such as, e.g., a row or column of data entries, such as email addresses or other data entries of a predetermined format.

In case the plaintext has a predetermined format, wherein the method is preferably format-preserving, so that the encrypted version of the plaintext has the same predetermined format.

The step of identifying within the input file the at least one data object for encryption may for comprise identifying at least one predetermined format property of sequences of data within the input file, and identifying any one of said sequences of data that matches the predetermined format property as the at least one data object for encryption. The identification of at least one predetermined format property of sequences of data may be carried out to take into account a need for protection - and thus encryption - of data. For example, email addresses may require stronger protection than web addresses.

The method according to the first aspect of the invention may further comprise the step of applying an operant-based operation to at least one of (a) the inputs for the S-boxes of the Feistel network and (b) the outputs of the S-boxes of the Feistel network.

In at least one of the iterations of the Feistel network, the S-box may be configured to receive an input of a size exceeding the size of the track defining the input for the S-box.

In at least one of the iterations of the Feistel network, the S-box may be configured to receive an input of a size equal to an integer multiple of the size of the track defining the input for the S-box.

Each track of the Feistel network may have a pre-determined size, and in at least one of the iterations of the Feistel network, the S-box may be configured to generate an S-box output of a size exceeding the pre-determined size.

Each track of the Feistel network may have a pre-determined size, and in at least one of the iterations of the Feistel network, the S-box may configured to generate an S-box output of a size equal to an integer multiple of a destination track size.

The step of identifying within the input file the at least one data object for encryption may comprise identifying at least one predetermined format property of sequences of data within the input file, and identifying any one of said sequences of data that matches the predetermined format property as the at least one data object for encryption.

The present invention also provides in a second, independent aspect a computer-implemented method of encrypting an input file by Feistel-network-based block-cipher encryption of plaintext derived from the input file, the method implementing a block cipher algorithm based on two or more of tracks and on one or more S-boxes, wherein each of the S-boxes is configured to receive an input of a predetermined input size, the method comprising the steps of:
- identifying within the input file at least one data object for encryption and an amount of data which not for encryption;
- defining the at least one data object as said plaintext for encryption by the block cipher algorithm;
- determining a size of the plaintext;
- determining if the size of the plaintext exceeds the predetermined input size of the one or more S-boxes;
   if the size of the plaintext exceeds the predetermined input size of the one or more S-boxes:
      - splitting the plaintext into plaintext portions, wherein the number of plaintext portions is equal to the number of tracks, wherein each plaintext portion has a portion size, and wherein the sum of all of the portion sizes is equal to the size of the plaintext, and wherein each portion size is smaller than or equal to the predetermined input size of the one or more S-boxes, and wherein the plaintext is not divided prior to the step of splitting the plaintext into plaintext portions, and wherein each plaintext portion is not split further prior to the steps of defining respective initial values of each of the tracks and iterating the Feistel network;
      - defining respective initial values of each of the tracks on the basis of respective corresponding plaintext portions;
   if the size of the plaintext does not exceed the predetermined input size of the one or more S-boxes:
      - defining respective initial values of each of the tracks on the basis of the plaintext;
- iterating the Feistel network a number of times by updating the track values on the basis of one or more S-box outputs;
- combining the respective resulting outputs of each track of the Feistel network to obtain an encrypted version of the plaintext as ciphertext;
   and subsequently:
- generating an output file comprising the amount of data not for encryption in its original non-encrypted format and the ciphertext obtained by encryption of the at least one data object, wherein the output file does not include the non-encrypted version of the data object.

It will be appreciated that the method of encrypting the input file by Feistel-network-based block-cipher encryption of plaintext may be embodied as a method according to the first aspect of the invention.

Embodiments of the first and second aspects of the present invention are applicable in a computer-implemented method of performing format-preserving encryption of a data object of variable size. Known methods of format-preserving encryption focus on encrypting data objects of a fixed-size format, such as social security numbers or credit card numbers having a predefined number of digits. Simple methods for fixed-size format-preserving encryption may be adapted to encrypt a data object of variable size, such as an e-mail address, by defining a fixed-size format that matches the given specific object's size. For example, if the e-mail address "name@domain.com" is to be format-preserving encrypted, a fixed-size format can be defined with 4 characters before the '@', 6 characters between the '@' and the '.' and 3 characters after the '.'. Practically, the 4 and 6 and 3 characters may be concatenated and format-preserving encrypted as a 13-character text string and the '@' and '.' may then be inserted at the original positions in the encrypted string. As a consequence of this approach, the encrypted version of the e-mail "name@domain.com" will also have 4 characters before the '@', 6 characters between the '@' and the '.' and 3 characters after the '.' as this is how the fixed-size format defined to handle the particular e-mail address was constructed.

For a true fixed-size format, it is not a security problem to preserve the exact format of the non-encrypted data object in the encrypted data object since all encrypted data objects by definition will have that format. When all data objects have the same format, there is no information in knowing the format of a particular data object. But for a variable-size format, it may constitute a security problem to preserve the format of the non-encrypted data object in the encrypted data object since preserved format information (in the e-mail example above, that would be the total size and the positions of the '@' and '.') is non-encrypted information leaked from the non-encrypted version of the data object to the encrypted version of the data object. Due to this information leak, the encrypted data carry information which may be used to identify or exclude one or more possible input sets of data from a definite host of possible input sets of data.

On the above background, it is desirable to provide a method which enhances security and renders format-preserving encryption of variable-size data object more secure by reducing the format information leakage.

Disclosed herein is a computer-implemented method of performing format-preserving encryption of a data object of variable size, the method utilizing an inner encryption algorithm which is capable of taking a variable size input and of outputting, as its output, an encrypted version of the variable size input, the method comprising: compressing or encoding the data object in its totality to obtain a compressed or encoded version of the data object in a format compatible with the inner encryption algorithm; encrypting, by use of the inner encryption algorithm, the compressed or encoded version of the data object to obtain an encrypted version of the data object; decompressing or decoding the encrypted version of the data object to obtain a decompressed or decoded version of the encrypted version of the data object; outputting, as a format-preserved encrypted version of the data object, the decompressed or decoded version of the encrypted version of the data object.

In one embodiment the inner encryption algorithm of the above method is provided in the form of a Feistel-network-based block-cipher according to the first aspect of the invention. Thus in the inner encryption algorithm, the step of encrypting may comprise a computer-implemented method of performing Feistel-network-based block-cipher encryption of plaintext according to the first aspect of the invention. The compressed or encoded version of the data object may be taken as the plaintext for said Feistel-network-based block-cipher encryption, and the ciphertext obtained by said Feistel-network-based block-ciper encryption as the encrypted version of the plaintext may be taken as the encrypted version of the data object in the above method.

Information leakage may be reduced by the method if the data object is compressed or encoded in its totality (the compressed or encoded version of the data object including possible format properties such as position of '@' and '.') whereby this format information will also be subject to the inner encryption, instead of being passed unencrypted to the output. Compared to the previous example, this method will ensure that the '@' and '.' typically no longer have the same position in the encrypted version as in the non-encrypted version.

Further, the method does preferably not preserve any relation between the length of the format-preserved encrypted version of the data object and the length of the original, i.e. non-encrypted, version of the data object. In other words, the steps of compressing or encoding and/or encrypting and/or decompressing or encoding may be configured such that the length of the data object is not necessarily preserved, or even such that the length of the data object is (deliberately) altered, in which case the length of the format-preserved encrypted version of the data object is (always) different from the length of the original, i.e. non-encrypted, version of the data object.

It will be understood that, whilst the method of performing format-preserving encryption of the data object, the inner encryption algorithm, which is capable of taking a variable size input, need not be format-preserving in itself. The steps of compressing or encoding, on the one hand, and/or decompressing or decoding, on the other hand, may have format-preserving properties. The step of compressing or encoding as well as the step of decompressing or decoding may thus be carried out to retain format-preserving capabilities of the method according to the invention, even though the inner encryption algorithm is not necessarily format-preserving in itself. In one example, the data object to be encrypted may be provided in a format with a plurality of degrees of freedom, such as length, position of predetermined characters, types of character sets applied, etc., whereas the inner encryption algorithm may allow fewer or only a single degree of freedom, such as number of bits (in case the inner encryption algorithm operates on bit strings), or an integer interval/domain (in case the inner encryption algorithm operates on integers within a given domain). The steps of compressing or encoding may include sub-steps of determining a format of the data object (e.g. automatically or through user input or other types of input), and the step of decompressing or decoding and/or the step of outputting may include the sub-step of rendering the format-preserved encryption version of the data object in the same format as the data object.

In the present context, "a format compatible with the inner encryption algorithm" should be understood to mean that the step of compressing produces an output which the inner encryption algorithm is capable of taking as an input, such as, for example, a simplified input in the form of, e.g., a string of bits or an integer within a given domain. Thus, if the inner encryption algorithm accepts binary input only, then the step of compressing or encoding should produce the compressed or encoded version of the data object in a binary format, even though the data object has not been in a binary format prior to the compression or encoding step.

Herein "format-preserving encryption" may be understood to mean encryption, in which an input to be encrypted as well as an encrypted output fulfils a predetermined definition of a given format. For instance, the format of the encrypted version of the data object may share predetermined attributes with the format of the original, i.e. non-encrypted version of the data object. Thus, the format of the data object may have at least one predetermined attribute which is reproduced in the format-preserved encrypted version of the data object. The at least one predetermined attribute may be one which is readable or ascertainable by a human. For example, the at least one predetermined attribute may comprise one or more predetermined characters in the data object, such as one or more of the characters '@', point ('.'), comma (','), colon (':'), semi-colon (';'), a dollar sign ('$'), '§', etc., and/or one or more predetermined Latin or Greek letters and/or one or more alphanumeric numbers. The at least one predetermined attribute may further comprise a position within the data object of the one or more predetermined characters in the data object.

The expression "format-preserving properties" of a method or a step should be understood to mean that at least one predetermined attribute of the data object is reproduced or retained by the method or step concerned.

Optionally, the data object may be processed by a compression algorithm to obtain a version compatible with the inner encryption algorithm and/or decompressed in order to convert the output of the inner encryption into the resulting encryption version of the data object. One advantage of using compression and/or decompression is that this method can reduce the correlation between the size of the data object and the size of the encrypted version of the data object as compression typically converts different characters into output of different size and decompression typically consumes different sizes of input in order to output different characters. Another potential advantage of using compression is that it may reduce the size of the object to be encrypted by the inner encryption which allows for other security techniques such as adding padding or integrity check information at an appropriate step of the steps of the prevent inventions.

In preferred embodiments of the present invention, the terms "encoding" and "decoding" are distinctive relative to the terms "compression" and "decompression", in that encoding and decoding algorithms use a mapping table with fixed-size encoded symbols whereas compression and decompression algorithms use a mapping table with variable-size encoded symbols.

Optionally, padding (a pre-defined or random amount of extra information, the information itself being predefined and/or random) may be added as part of the format-preserving encryption process. By, as an example, adding a random amount of padding information or by padding with an amount of information which ensures that the total size of the padded data reaches a fixed size, the correlation between the size of the data object and the size of the encryption version of the data object can be reduced or even eliminated.

Thus, format information leakage resulting from unencrypted passing of format information from input data object to the format-preserving encrypted output can be reduced or avoided. Likewise, size information leakage can be reduced or avoided since the correlation between size of input data object and the format-preserving encrypted output is reduced or eliminated.

Disclosed herein is further a computer-implemented method of performing format-preserving encryption of a data object of variable size, the data object having a predefined format and comprising a plurality of characters occurring in at least two sequences of text characters mutually separated by predefined format-defining characters, wherein the plurality of characters and the format-defining characters define at least one format property of the data object, the method comprising: compressing or encoding at least one of: the at least two sequences of text characters and the format-defining characters; and the at least two sequences of text characters and the at least one format property to obtain an encoded set of data; encrypting the encoded set of data by use of an inner encryption algorithm which is capable of taking a variable size input and of outputting, as its output, an encrypted version of the variable size input, to obtain an encrypted set of data; decompressing or decoding the encrypted set of data to obtain a decoded encrypted set of data fulfilling the predefined format of the data object; outputting the decoded encrypted set of data as a format-preserved encrypted version of the data object.

The sequences of text characters as well as the format-defining characters and/or the format property are thus encoded, whereby the cryptographic strength of the format-preserving encryption method is increased relative to other methods, in which the format-defining characters and/or the format property are omitted from encoding.

Thus, as this method may reduce leakage of format information and/or size information from the input data object to the format-preserving encrypted data object.

Disclosed herein is further a computer-implemented method of performing format-preserving encryption of a data object of variable size, the data object having a predefined format, the method comprising: compressing or encoding, by use of a reversible compression or encoding algorithm, the data object to obtain a compressed or encoded version of the data object; encrypting the compressed or encoded version of the data object by use of an inner encryption algorithm which is capable of taking a variable size input and of outputting, as its output, an encrypted version of the variable size input, to obtain an encrypted version of the data object; decompressing or decoding, by use of a reversible decompression or decoding algorithm, the encrypted version of the data object to obtain a decompressed or decoded encrypted version of the data object fulfilling the pre-defined format of the data object; outputting the decompressed or decoded encrypted version of the data object as a format-preserved encrypted version of the data object; wherein the decompression or decoding algorithm is different from a reversed version of the compression or encoding algorithm.

Thanks to the decompression or decoding algorithm being different from a reversed version of the compression or encoding algorithm, the algorithms may be tailored such that the compression or encoding algorithm accepts inputs where the decompression or decoding algorithm cannot generate such output, for example because the decompression or decoding algorithm does not utilize the full capabilities or accepted values of the given format and/or because the compression or encoding algorithm cannot produce certain values of the compressed or encoding version of the data object. Thus, mapping tables for compression, encoding, decompression, and/or decoding with undefined output values may be applied.

This may in particular be an advantage when using encoding and decoding algorithms which encode data by mapping each symbol of the input into fixed-size encoded versions. In particular, the use of different encoding and decoding mappings may resolve constraints that would otherwise exist if a mapping table was to be applied, as such mapping table would have had to allow any value to be mapped in two directions (i.e. any possible value in a non-encoded data object would have had to be encodeable and at the same time, any possible value in an encoded data object would have had to be decodeable).

Another potential advantage of using different decompression or decoding algorithms vs. compression or encoding algorithms is that the format-preserving encryption can be constructed such that is tolerant to (minor) format errors in the input but at the same time guarantees that the format of the encrypted output is strictly valid.

As used herein, the term "format-preserving encryption" means that the output data resulting from the claimed method, i.e. ciphertext, have the same format as its input data, i.e. of the plaintext. Thus, the ciphertext (i.e. the encrypted data) has the same format as a predefined format of the plaintext (i.e. the data object). Thus, for example one or more predefined characters in the plaintext (i.e. data object) also occur in their original, non-encrypted form in the ciphertext. For example, in case the method is configured to encrypt email addresses including '@' and '.' characters, then the output will appear as an email address also including '@' and '.' characters. Generally, format-preserving encryption ensures that its output adheres to a definition of a given format of the original data object.

The inner encryption and decryption algorithms may include any suitable method for converting plaintext into ciphertext that is not easily understood unless an appropriate cryptographic key is used for decryption. The algorithms may be of any kind known *per se.* For example, symmetric or asymmetric encryption algorithms may be used. Applicable algorithms include AES, RSA, and the like. Whilst these encryption algorithms are generally not format-preserving on their own, the method of the present invention is format-preserving due its format-preserving properties which, in preferred embodiments, result from the format-preserving capabilities rendered by the compressing or encoding steps, and/or by the decompressing or decoding step and/or by the outputting step.

As used herein, the term "encoding" refers to the step of converting data in one format into another format, such as by conversion of a text string into a bit string. The converted, i.e. encoded, bit string normally has a size directly proportional to the size of the input data, but it may alternatively be of a size which is not directly proportional to the input size. By directly proportional size is meant that an input of a given size, such as three characters, always results in an encoded bit string of a predetermined size, e.g., 18 bits. Encoding may be reversible by decoding to convert the encoded data back into their original form.

In the present context "compression" means conversion of data into from one format into another format, such as by conversion of a text string into a bit string. The compressed bit string normally has a size which is not directly proportional to the size of the input data. Thus, an input of a given size, such as three characters, may result in a compressed output bit string of a size which depends from the actual value (i.e. content) of the input characters. Compression may be reversible by decompression to convert the encoded data back into the original form.

In the methods of the present invention, the decompression step preferably does not perform inverse operations relative to the compression step for the performance of format-preserving encryption. However, for decryption purposes, a decompression step is necessarily used, which is the inverse of the compression procedure applied for encryption. Likewise, for decryption, a compression step is necessarily utilized, which is the inverse of the decompression procedure used for encryption.

By analogy, in the methods of the present invention, decoding is preferably not the inverse of the encoding for the performance of format-preserving encryption. However, for decryption purposes, a decoding step is necessarily used, which is the inverse of the encoding procedure applied for encryption. Likewise, for decryption, an encoding step is necessarily utilized, which is the inverse of the decoding procedure used for encryption.

Disclosed herein is further a computer-implemented method of performing format-preserving encryption of a data object of variable size, the method utilizing an inner encryption algorithm which is capable of taking a variable size input and of outputting, as its output, an encrypted version of the variable size input, the method comprising:
- compressing or encoding the data object in its totality to obtain a compressed or encoded version of the data object in a format compatible with the inner encryption algorithm;
- encrypting, by use of the inner encryption algorithm, the compressed or encoded version of the data object to obtain an encrypted version of the data object;
- decompressing or decoding the encrypted version of the data object to obtain a decompressed or decoded version of the encrypted version of the data object;
- outputting, as a format-preserved encrypted version of the data object, the decompressed or decoded version of the encrypted version of the data object, wherein, in the inner encryption algorithm, the step of encrypting comprises a computer-implemented method of performing Feistel-network-based block-cipher encryption of plaintext;
   said method of performing Feistel-network-based block-cipher encryption of plaintext implementing a block cipher algorithm based on two or more of tracks and on one or more S-boxes and comprising the steps of:
      - splitting the plaintext into plaintext portions, wherein the number of plaintext portions is equal to the number of tracks, wherein each plaintext portion has a portion size, and wherein the sum of all of the portion sizes is equal to the size of the plaintext;
      - defining respective initial values of each of the tracks on the basis of respective corresponding plaintext portions;
      - iterating the Feistel network a number of times by updating the track values on the basis of one or more S-box outputs;
      - combining the respective resulting outputs of each track of the Feistel network to obtain an encrypted version of the plaintext as ciphertext;
         wherein
   the block cipher is adjustable to fit the size of the plaintext, wherein the size of the plaintext determines the number of plaintext portions and the size of the individual plaintext portions;
   the size of the input for the S-box of each track of the block cipher is at least equal to the portion size of the plaintext portion fed into the S-box,
wherein
- the compressed or encoded version of the data object is taken as the plaintext for said Feistel-network-based block-cipher encryption, and
- the ciphertext obtained by said Feistel-network-based block-cipher encryption as the encrypted version of the plaintext is taken as the encrypted version of the data object in the method of performing format-preserving encryption of a data object of variable size.

In the present context, the term "bit string" refers to a sequence of bits. The term "text string" refers a sequence of characters that may include letters, digits, special characters, and/or spaces or other non-alphanumeric characters.

Herein, "integer" means whole numbers including numbers exceeding the size of the native register size capability of the computer system, in which the methods of the invention are executed. Some programming languages include software library support for dealing with integers larger than the native capability of the computer system, these are sometimes referred to as BigInteger.

E-mail address has been used as an example of a variable-size format in this text. Other examples could be a person's name, a postal address, a free-text text string, a structured text-based file, such as an XML, JSON, CSV or TXT file/document, or a part thereof, a text string descripting a medical diagnosis, a product name, or a country name. Many variable-size formats use format-defining characters. As an example, the string "John Doe" contains a person's name, where the space in between "John" and "Doe" indicates where to split the text string in order to obtain the two components composing the full name: the first name "John" and the last name "Doe".

### Definitions

Block cipher: A cryptographic algorithm operating in a plaintext of a given size (the block) given a key in order to achieve an encrypted version of the plaintext (the ciphertext). In classical block ciphers, the block size is fixed, typically a 128 bits or 64 bits wide binary block.

Plaintext: The (readable) piece of information to encrypt.

Ciphertext: The encrypted version of the plaintext.

Size: The term "size" is in this document typically used to describe the size in bits of a binary data object or the domain size or an integer data object.

Key: A binary value determining how the block cipher encrypts the plaintext. In order to decrypt the ciphertext, the same key must be used, or the decrypted version of the ciphertext will be meaningless. The key should be kept secret from the adversary.

Tweak: An input to the block cipher. If a plaintext is encrypted using two different tweaks, the ciphertexts are different. Compared to a key, a tweak does not need to be secret to the adversary. A block cipher may or may not use a tweak. Many block cipher designs does not support the use tweaks.

S-box: A table mapping. The S-box may be predefined or may be filled with values derived from some form of algorithm.

XOR: Logical bitwise exclusive-OR operation.

Modulus: The arithmetical modulus operation. A familiar use of modular arithmetic is in the 12-hour clock, in which the day is divided into two 12-hour periods. If the time is 7:00 now, then 8 hours later it will be 3:00. Usual addition would suggest that the later time should be 7 + 8 = 15, but this is not the answer because clock time "wraps around" every 12 hours. The modulus operation is often symbolized by'%'. The clock example as an equation: (7 + 8) % 12 = 3. Addition or subtraction in the domain size *n* may involve applying modulus *n* to ensure that the result is within the domain.

Integer domain: A domain of integers specifies the allowed integer values. In this document, the domain must typically be continuous, i.e. the domain is specified as any value between zero and *n* (zero inclusive, *n* not inclusive); this is a domain of size *n.*

### Brief description of the drawings

Embodiments of the invention will now be further described with reference to the accompanying drawings, wherein:
Figure 1 illustrates a general encryption algorithm;
Figure 2 illustrates a general block cipher;
Figure 3 illustrates types of block cipher round function designs;
Figure 4 illustrates an S-box;
Figure 5 illustrates a block cipher with configurable binary size;
Figure 6 illustrates a block cipher with configurable integer domain size;
Figure 7 illustrates how to perform operations in an integer domain on a standard processor architecture.
Figure 8 illustrates a block cipher round function with subkeys;
Figure 9 illustrates an algorithm for generating subkeys;
Figure 10 illustrates how using a subkey can activate otherwise passive parts of an S-box;
Figure 11 illustrates a block cipher where the ciphertext has a larger size than the plaintext.
Figure 12 illustrates a block cipher where the ciphertext has a smaller size than the plaintext.
Figure 13 illustrates an algorithm for determining track size based on block size.
Figure 14 illustrates an algorithm for determining track size based on block domain size using factorization.
Figures B-1 - B-14 are flow charts illustrating embodiments of format-preserving encryption methods according to the second aspect of the invention.
Figures B-15 - B-17 illustrate decoding of bit strings into valid email addresses.
Figure B-18 illustrates how a data object may be split into components before being compressed or encoded as part of the format-preserving encryption process.
Figure B-19 illustrates how the present invention may be used to produce test data from production data.
Figure B-20 illustrates how the format of a data object may be detected and compressed or encoded according to the detected format as part of the format-preserving encryption process.
Figures B-21 - B-24 illustrate how different keys and/or tweaks may be used for format-preserving encryption.
Figure B-25 illustrates three data records consisting of each four data objects.
Figure B-26 illustrates a block cipher.
Figures B-27 - B-40 illustrate methods for compressing, decompressing, encoding and decoding.

### Detailed description of embodiments of the invention

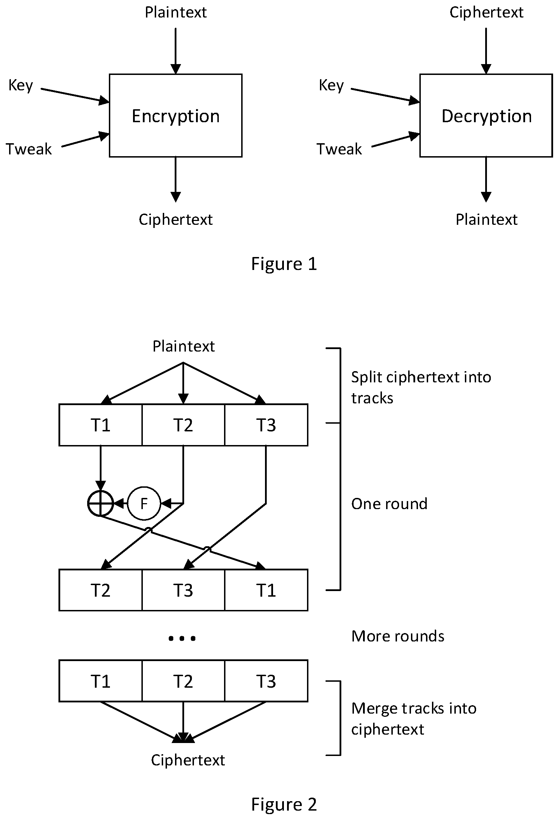

An encryption/decryption algorithm is illustrated in figure 1. In the left side of the figure, the plaintext (i.e. the original piece of data to encrypt) is fed into the encryption algorithm. Furthermore, a key and optionally a tweak are fed into the algorithm. As a result, the algorithm outputs the ciphertext (the encrypted version of the plaintext). In the right side of the figure, the ciphertext is decrypted back into the ciphertext. In order to achieve the plaintext, the decryption algorithm must be provided with the same key and same tweak (if used) as used for encryption. Any difference in the key or in the optional tweak will make the algorithm return a completely different (and thus wrong and meaningless) plaintext. The weak, if used, may be a value associated with the plaintext; for example, if the plaintext is one data field in a record, the tweak may be another data field in that record. The tweak may be a value dedicated explicitly to the purpose of being a tweak or may be an existing field of the record, or even a combination of several existing fields. The tweak can be used to ensure that even if the same plaintext value is present in two records, the ciphertext will be different for the two records and there will thus not be any clue to an adversary that the two records had the same plaintext value.

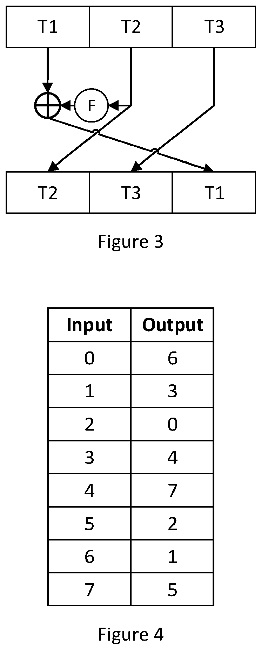

A block cipher based on a Feistel network is illustrated in figure 2. In the first step, the plaintext is split into two or more plaintext portions (three in the figure); these plaintext portions constitute the initial values of the tracks. The plaintext has a size; the plaintext portions and thereby the tracks have a total size equivalent to the size of the plaintext. In the a round (also illustrated in figure 3) the value of one of more tracks are updated or manipulated based on the output of a round function (F in the figures). The found function typically relies on an S-box, which is a lookup in a table. The S-box table has an input size (defined by the number of rows in the table) and an output size (defined by the maximum value found in the table). A round may update or manipulate one or more of the tracks and each update or manipulation may be a function of one or more tracks. The number of rounds executed is often an integer multiple of the number of tracks such that all tracks have been manipulated or updated the same number of times and such that the tracks are arranged in the same order after the rounds have been executed. After applying the rounds, the tracks are merged back into forming the ciphertext as output.

An S-box is illustrated in figure 4. This S-box has an input domain size of 8 (values 0 to 7, both inclusive) and an output domain size of 8 (all values are in the range 0 to 7, both inclusive). Since 8 (the domain sizes) is equivalent to 2 to the 3^{rd} power, this S-box also has a binary size of 3; a 3-bit number can hold the integer values 0 to 2³ = 8, the first inclusive and the second exclusive. Note that a computer implementation of the S-box typically will only contain the right column of the table; the lookup will be based on row number. An S-box may have predefined content or may have content generated by an algorithm, for example a cryptographic algorithm, for example a pseudo-random number generator, such pseudo-random number generator may be initialized based on information derived from the key, the tweak, the block size, the plaintext size, and/or the ciphertext size. The pseudo-random generator may be based on the AES encryption algorithm (e.g. in counter mode) or on a stream cipher or a block cipher in stream cipher or a block cipher, hash function, or MAC function in pseudo-random number generator mode. The S-box in example 4 has unique values in the output column (i.e. all values are represented exactly once); S-boxes may be designed without a requirement for unique values in the output columns and/or without a requirement of all values being represented; for example an S-box with random values in the output column can typically neither guarantee uniqueness or that all values are present; as another example, if the input size larger than the output size, uniqueness cannot be guaranteed; as another example, if the input size is smaller than the output size, it cannot be guaranteed that all values are present in the output.

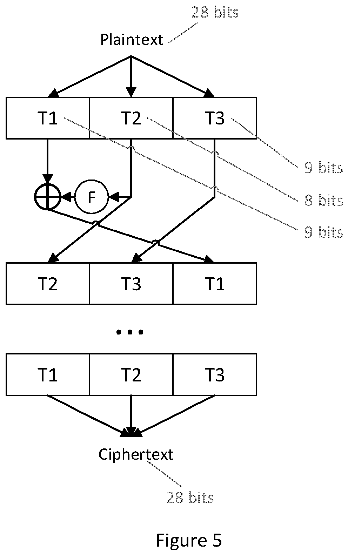

A block cipher operating on binary content of a given size is illustrated in figure 5. In the example, the plaintext, ciphertext, and block sizes are all 28 bits. The 28 bits are divided among three where the tracks are assigned widths of 8, 9, and 8 bits respectively.

In a classical design, F in figure 5 would be an S-box or a function utilizing an S-box. In this example, its input size would be 8 bits (the size of its input, T2) and its output size would be 9 bits (the size of the track to apply the result to, T1). In one embodiment of the present invention is to have a larger input size and/or output size such that the S-box can be used for tracks of different size and/or for different configurations (e.g. different plaintext, ciphertext, and/or block sizes) of the block cipher.

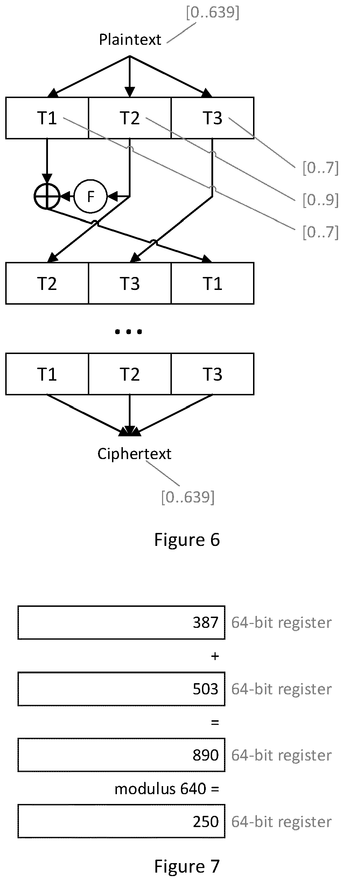

A block cipher operating on inter content within a given domain size is illustrated in figure 6. In the example, the plaintext, ciphertext, and block size are all in the interval 0 to 639 (both inclusive), i.e. the domain size if 640. The block domain size is then factorized into the three factors 640 = 8 · 10 · 8. These factors are assigned as domain size for the three tracks.

Splitting the value of the plaintext in figure 6 may for example be performed by first calculating plaintext modulus 8 to achieve T3. Then the plaintext is divided by 8 and modulus 10 is applied on the result to achieve T2. Finally, the plaintext is divided by 8 · 10 = 80 to achieve T1. Similarly, the ciphertext may for example be merged by the following formula: Ciphertext = T1 · 8 · 10 + T2 · 8 + T3.

In a classical design, F in figure 6 would be an S-box or a function utilizing an S-box. In this example, its input size would have an integer domain size of 10 (the size of its input, T2) and its output would have an integer domain size of 8 (the size of the track to apply the result to, T1). In one embodiment of the present invention is to have a larger input size and/or output size such that the S-box can be used for tracks of different size and/or for different configurations (e.g. different plaintext, ciphertext, and/or block sizes) of the block cipher.

In the examples of figures 5 and 6, the tracks T1, T2 and T3 would typically maintain their size throughout the encryption process.

Decryption in a Feistel network is typically performed by performing the operations in opposite order. For some operations, e.g. plus modulus and minus modulus, the opposite operation may be applied when decrypting in order to correctly reverse the encryption operation.

The number of tracks and how the bits or domain are distributed between them may be defined by rules and/or an algorithm. Such rules and/or algorithm may be constructed such that it assigns the bits or domain as evenly as possible between the tracks. Such rules and/or algorithm may define the number of tracks and the distribution between them such that the size of each track will be within a predefined range.

Performing arithmetic in a domain on a normal processor or computer architecture is illustrated in figure 7. In the example, the integer domain size is 640, i.e. legal values are in the range 0 to 639 (both inclusive). In the example, the calculations are performed using 64-bit registers, i.e. the registers have a different size than the domain. In order to ensure that the result of the addition in the example is within the domain, modulus 640 is applied to the result of the addition in order to achieve the result in the domain.

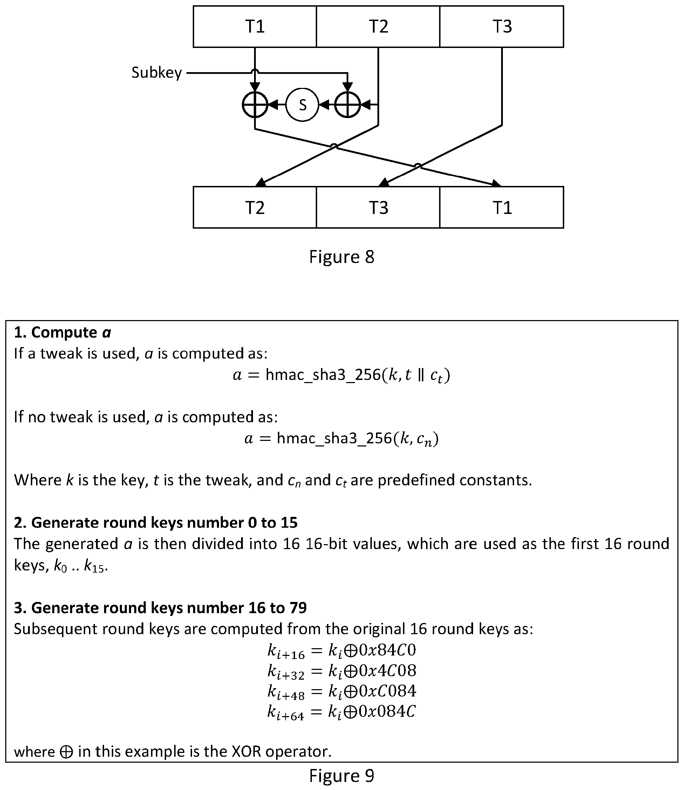

A round function may depend on a round key as illustrated in figure 8. The circle with a plus inside illustrated an operation, such operation may for example be XOR, addition with modulus or subtraction with modulus. The circle with an 'S' inside illustrates an S-box. The subkey may be applied before the S-box, after the S-box, or subkeys may be applied both before and after the S-box.

Figure 9 illustrates an example of a method for generating 16-bit round keys (equivalent to subkeys in a integer domain of size 65536). In step one, the key, eventually the tweak, and a constant are concatenated and the result is hashed to obtain a 256-bit hash result. In step 2, the 256-bit has result is split into 16 16-bit round keys. In step 3, further round keys are created by added constants to the 16 round keys derived from the hash value.

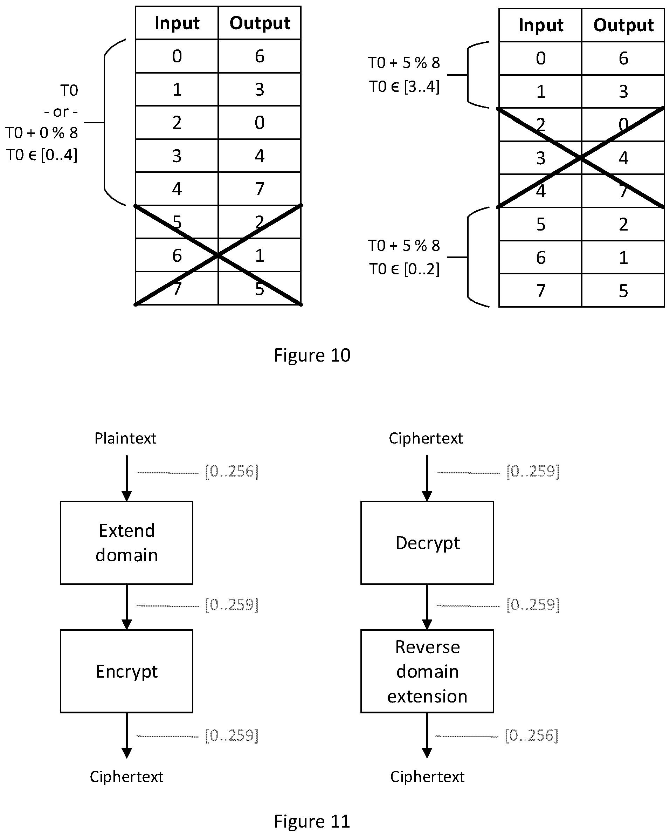

An S-box may have an input domain size or input bit size larger than the domain size or bit size of the input number. Figure 10 illustrates an example where the track value T0 with an integer domain size of 5 is used as input to an S-box with 8 values (i.e. an input domain size of 8). It is illustrated in the left side of figure 10 that if using T0 as lookup without further manipulation, the last three rows of the S-box table can never be addressed. It is illustrated in right side of figure 10 that by using an offset (the value 5 in the example; for example in the form of a subkey), the unused rows of the S-box table can be moved. For example by designing unique offsets or by using random-appearing offset values, e.g. in the form of subkeys, and ideally using different offsets/subkeys per round, it may be ensured that the parts of the S-box not used is unpredictable to an adversary and/or the unused rows are evenly distributed across the rounds.

The block size and ciphertext size may be chosen to be larger than the plaintext size. Figure 11 illustrates an example, where the plaintext has an integer domain size of 257. Since 257 is a prime, it cannot be factorized into meaningful track sizes. One solution to that problem may be to extend the domain size to 260, which can be factorized into two tracks of size 20 and 13 respectively. This extension may for example be performed by allowing three new values: 257, 258, and 259. These will never be utilized in the input, but will be as likely as any other value as ciphertext. In order to decrypt the ciphertext, the decryption is performed on an integer domain size of 260. Reversing the domain size to 257 does not require any effort (except perhaps a sanity check that the ciphertext does not exceed 256) since the original plaintext cannot exceed 256.

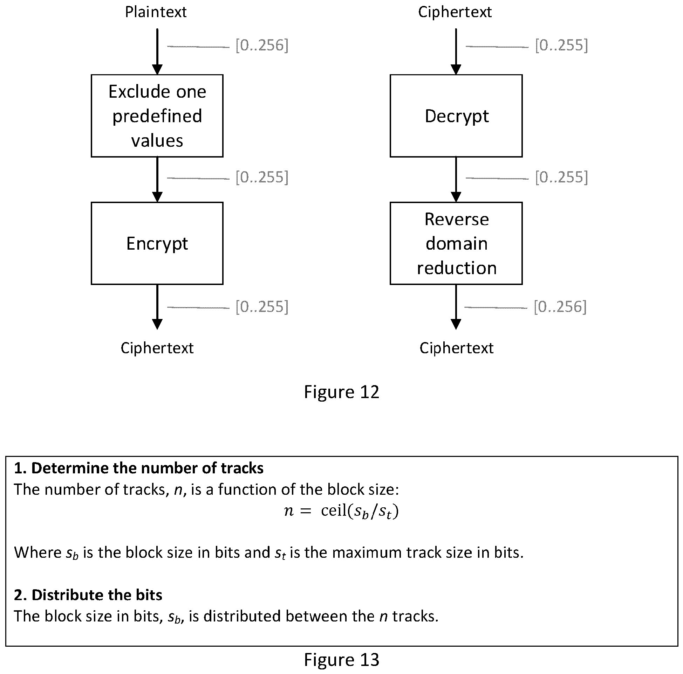

The block size and ciphertext size may be chosen to be smaller than the plaintext size. Figure 12 illustrates an example, where the plaintext has an integer domain size of 257, which cannot be factorized into meaningful track sizes. Reducing the domain size to 256 allows factorization to two tracks of size 16 and 16 respectively. The reduction may for example be performed by removing a predefined value which is known not to be used in reality. If the removed value is not the last value (i.e. the value 256), is will be necessary to subtract 1 from the values above the removed value in order to close the gap. The plaintext of reduced integer domain can now be encrypted and the ciphertext can be achieved. In order to decrypt the ciphertext, the encryption step is performed as usual. Thereafter, the domain reduction is removed. In case 1 was subtracted from values above a removed value, 1 must be added to all values equal to or higher to the removed values. If needed, more than one value can be removed; to do so may require that 1 is subtracted from the plaintext if the plaintext is higher than the least removed value but less that the second-least removed value; 2 is subtracted if the plaintext value is above the second-least removed value but less that the third-least removed value; etc. An error situation may occur if the plaintext is equal to a removed value.

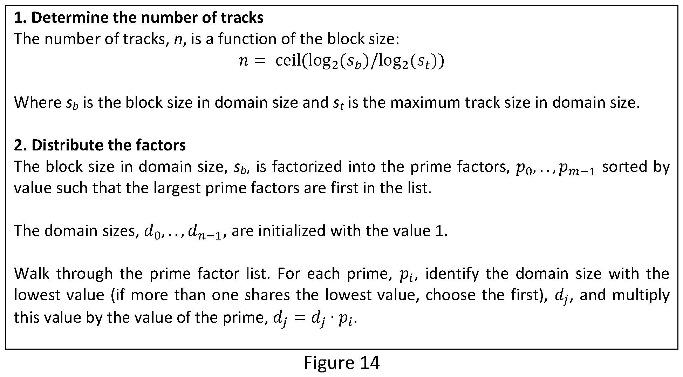

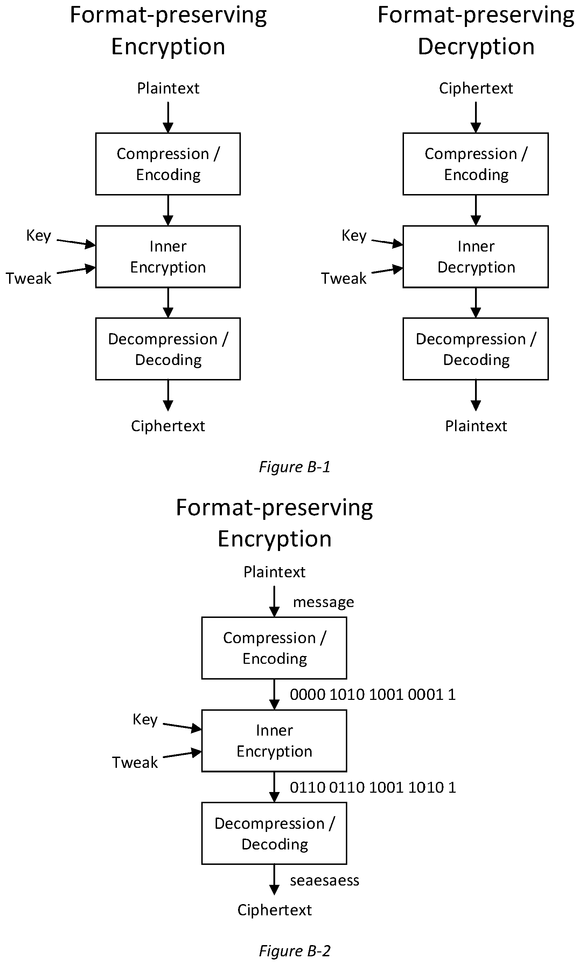

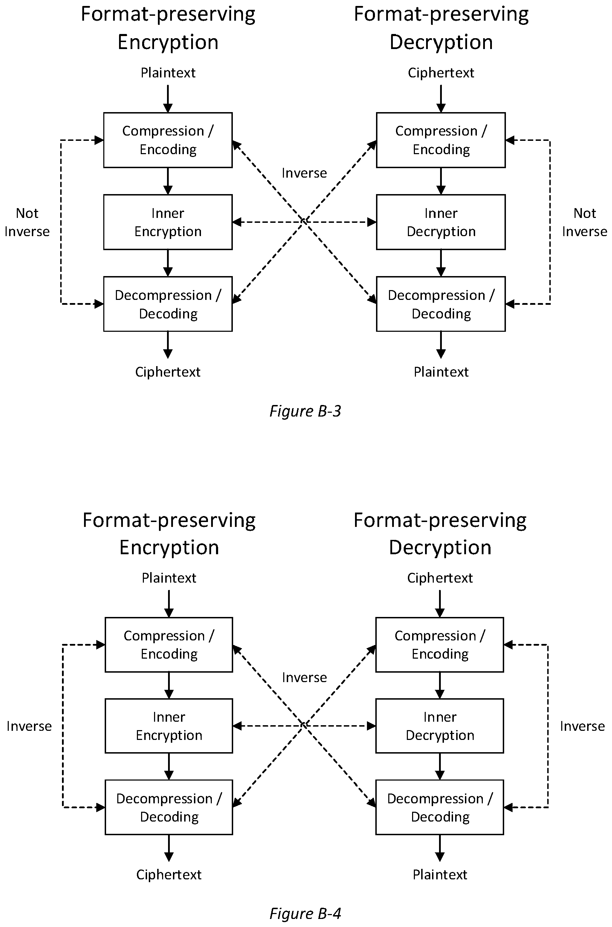

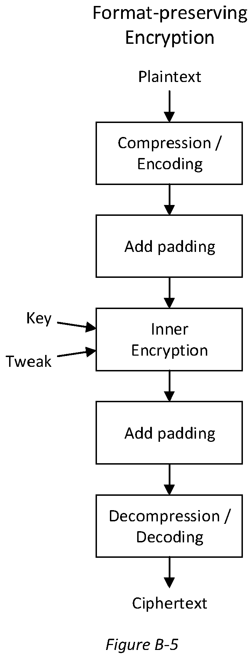

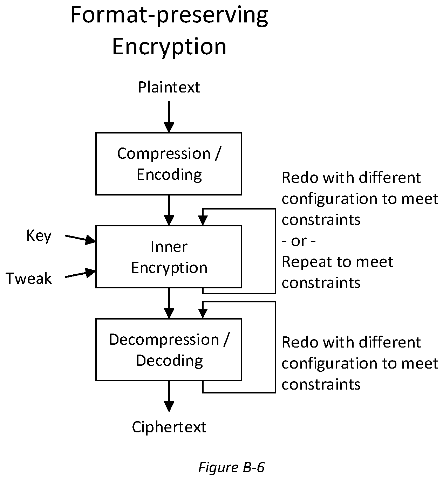

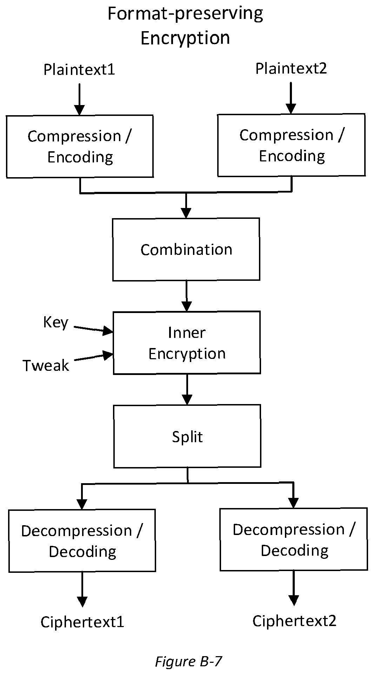

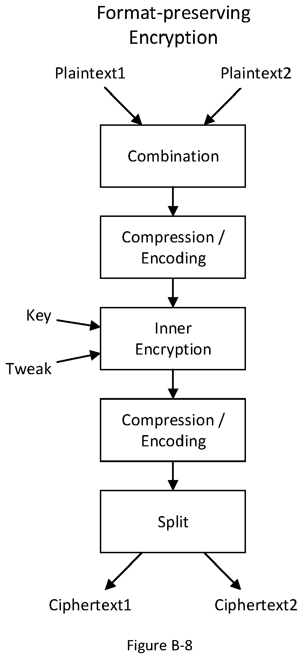

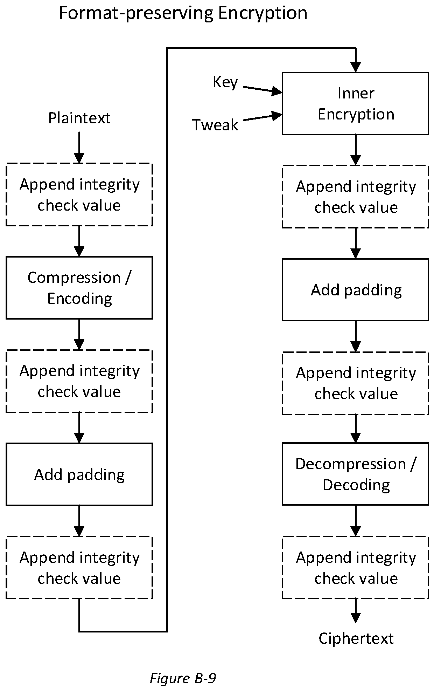

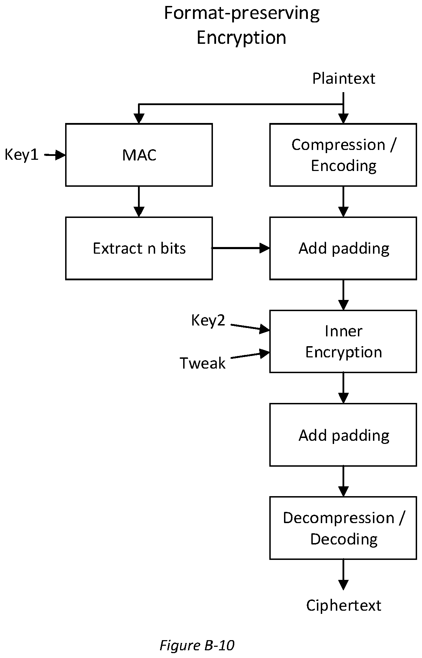

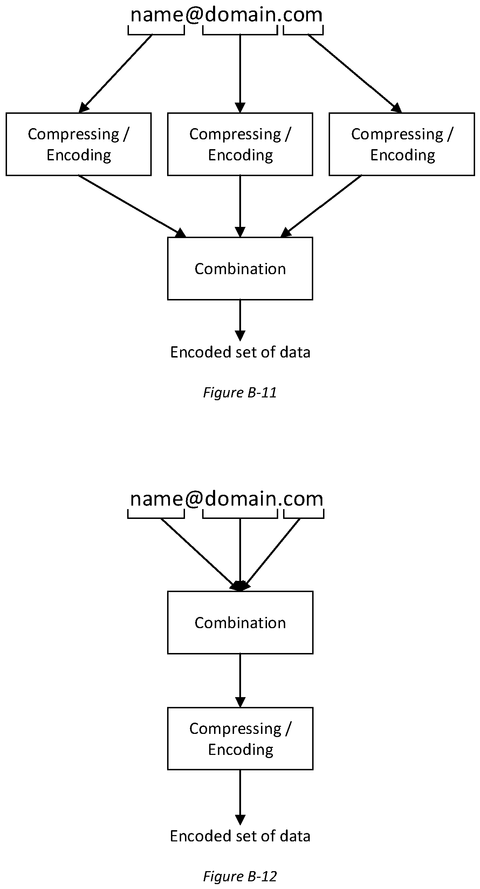

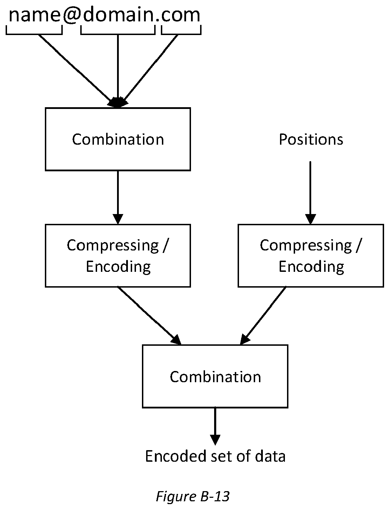

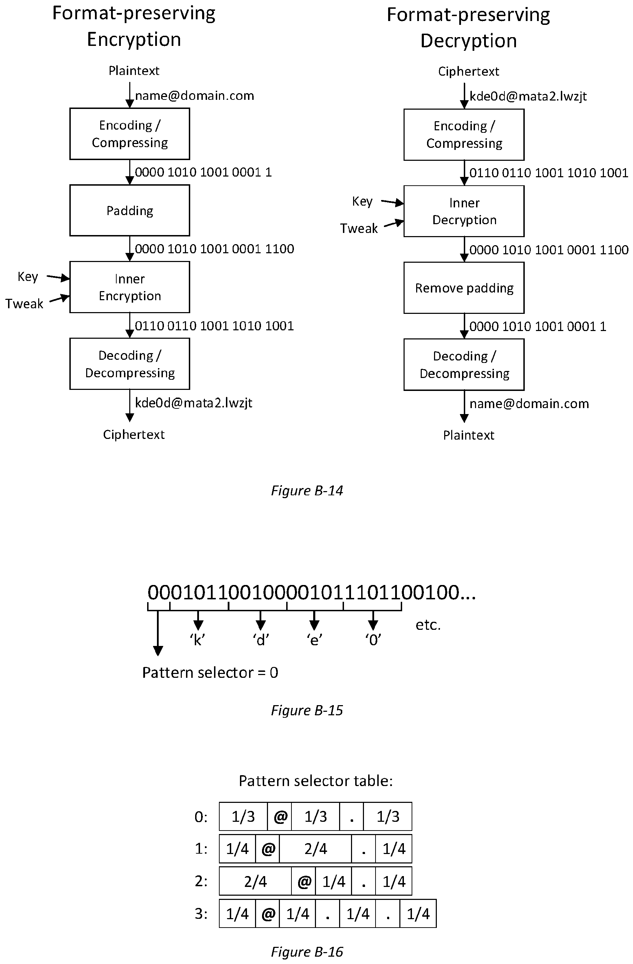

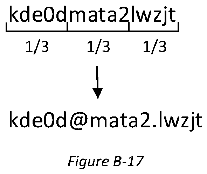

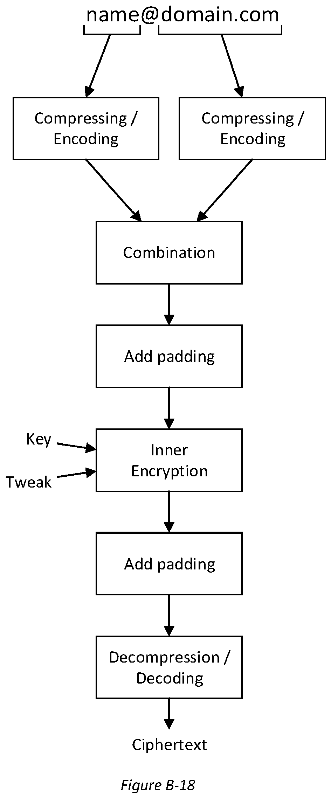

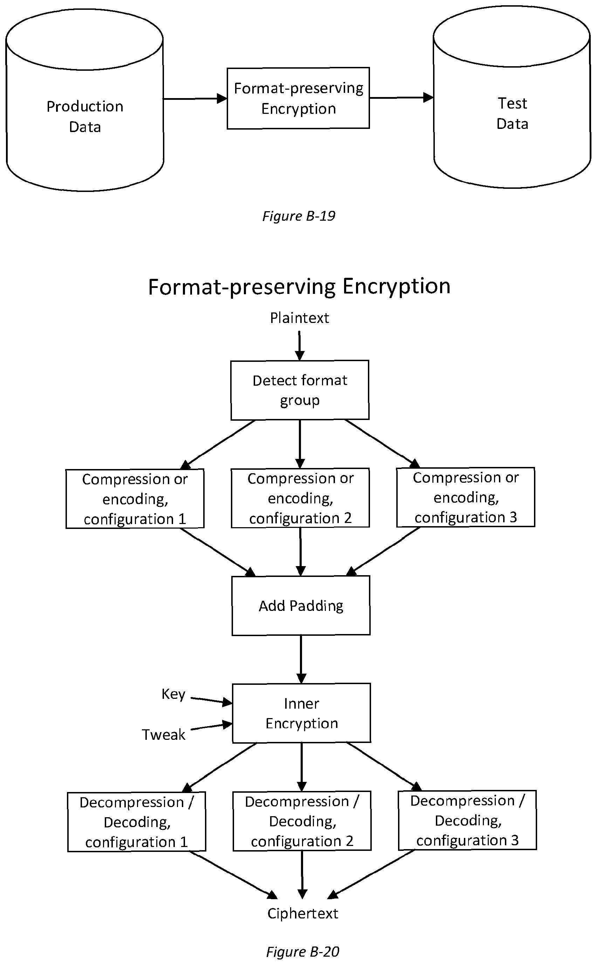

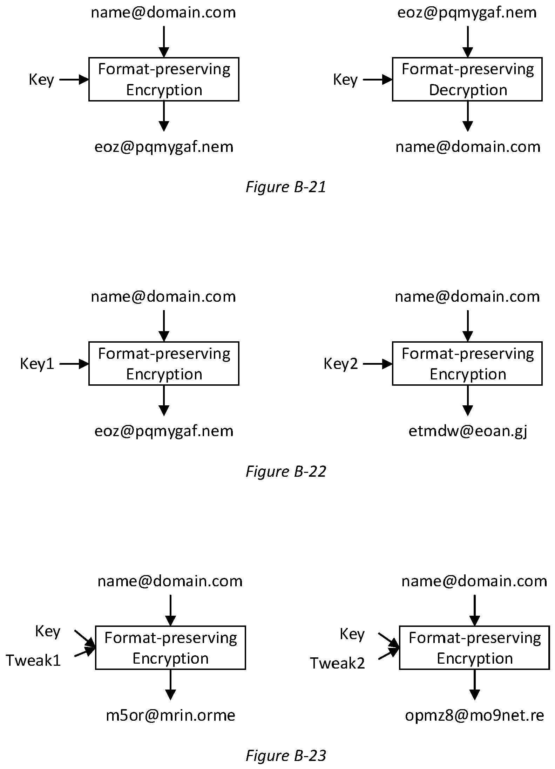

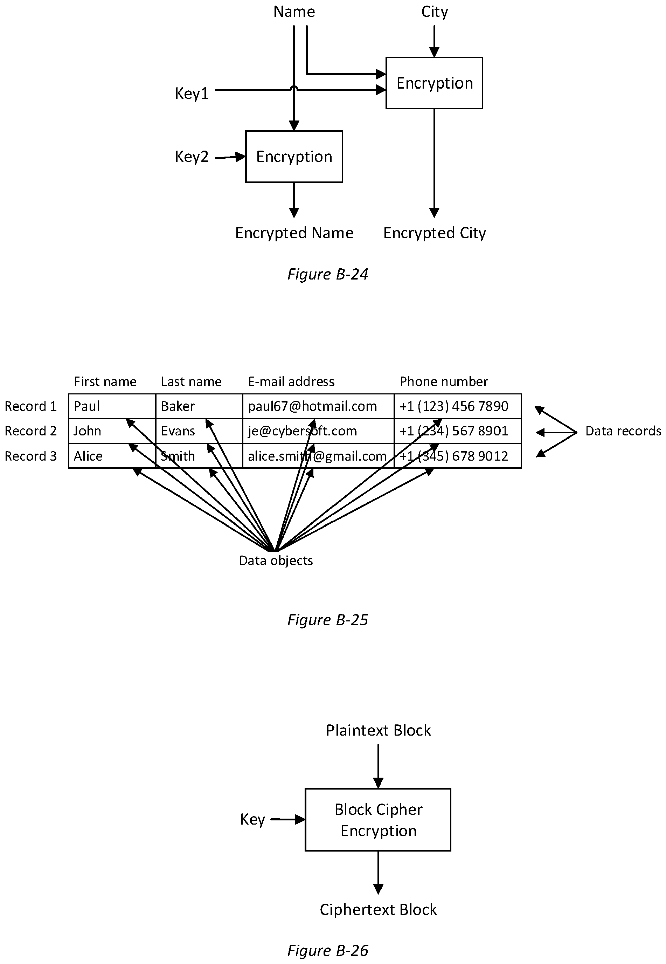

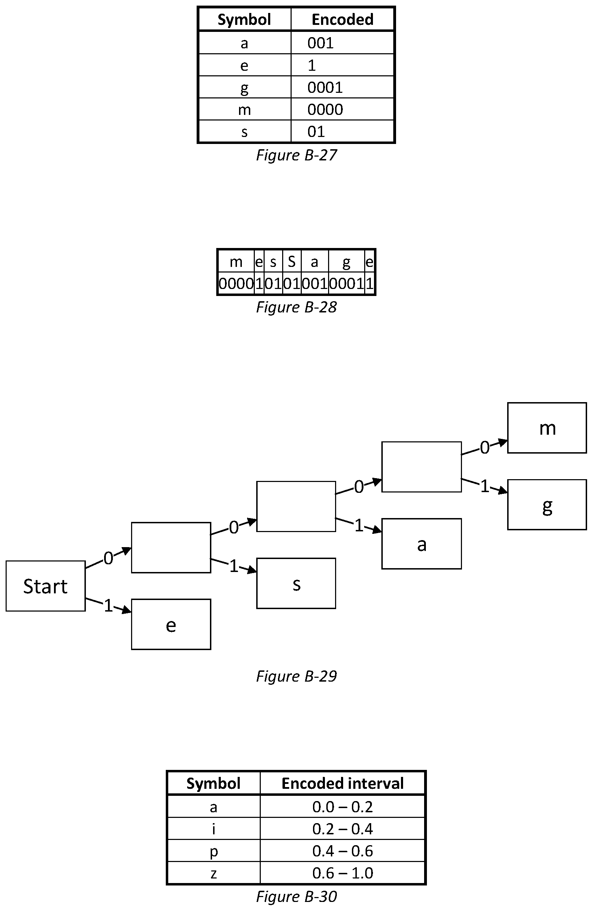

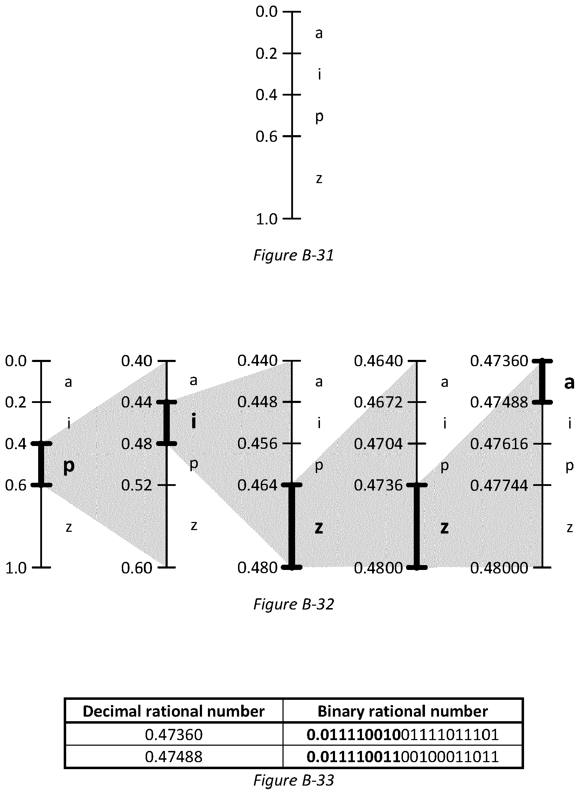

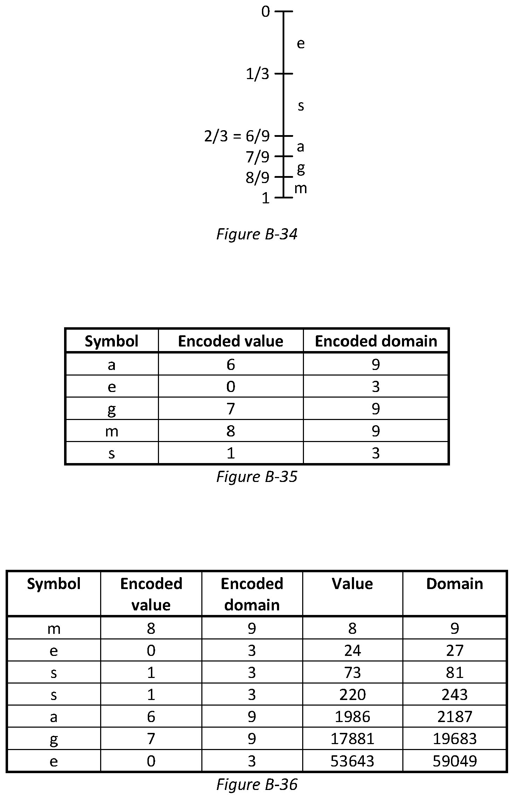

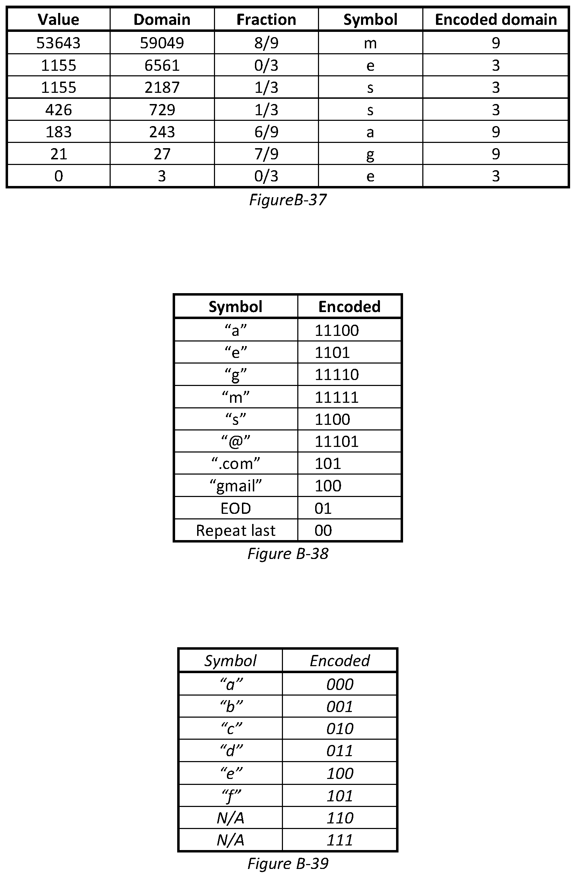

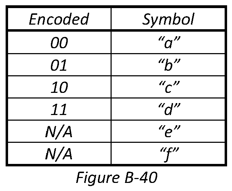

The number of tracks is typically defined by a deterministic algorithm. Figure 13 illustrates an example of such algorithm for a binary sized block cipher. In step one, the number of bits in the block size is divided by the maximum block size and the result is rounded up to the nearest integer number. In step two, the number of bits in the block size is distributed between the tracks. It is typically an objective to make the size of the tracks as similar as possible, i.e. the smallest track is at most one bit smaller than the largest track. Figure 14 illustrates an example of an algorithm for determining the block size of a integer domain block cipher. In step 1, the number of tracks is determined by dividing the logarithm of the integer domain by the logarithm of the maximum integer domain of a track. The result is rounded up. In step 2, the domain size is prime factored and the factors are ordered such that the largest is first. The value 1 is then assigned to all track sizes as their initial value. Then, each factor is multiplied to a track size; each factor is multiplied to the least track size. Once all factors have been multiplied to track sizes, the operation is except if an error occurred. One error scenario is if the domain size is a prime number or one of its prime factors is larger than the maximum track size. This error is irrecoverable. Another error scenario is if one of the track sizes computed by the algorithm exceeds the maximum track size. It may be possible to recover from this error by increasing the number of tracks by one and performing step 2 again. Another error scenario may be if the different between the track with largest size and the track with smallest size is too big. In case the domain size cannot be converted into a valid set of track sizes, the approach illustrated in figures 11 or 12 may be used to overcome the problem. The algorithms illustrated in figures 12 and 13 attempts to distribute the block size even between the track sizes, which is often favorable as similar amount of information per track typically leads to higher security level and/or need for applying less rounds to achieve a given security level. The algorithms in figures 12 and 13 may further contain functionality to ensure that large and small track sizes are distributed in a "randomized" order (e.g. in a deterministic manner) such that they are in reality sorted (or almost sorted) according to size.

Embodiments of the second aspect of the invention will now be described, the inner encryption algorithm of which may be embodied according to the first aspect of the invention as described and claimed above, including in the context of Figs. 1-14.

A cryptographic system for format-preserving encryption and format-preserving decryption is illustrated in figure B-1. Format-preserving encryption is illustrated in the left side of the figure and format-preserving decryption is illustrated in the right side of the figure. Format-preserving encryption comprises the steps of compressing or encoding the plaintext (plaintext is the input to the format-preserving encryption) into a compressed or encoded version of the plaintext. The compressed or encoded plaintext is then encrypted using an inner encryption algorithm which may also take a key and/or a tweak as input to obtain an encrypted version of the plaintext. Finally, the ciphertext (the encrypted version of the plaintext) is obtained by decompressing or decoding the encrypted version of the plaintext. Format-preserving decryption is performed by first compressing or encoding the ciphertext and then decrypting the compressed or encoded version of the ciphertext using the same key and/or tweak as used during format-preserving encryption. The decrypted version of the ciphertext is then decompressed or decoded to obtain the plaintext.

The same system is shown in figure B-2 with an example added. The text "message" in given as input (plaintext) to the system. The compression or encoding step converts the plaintext text string "message" into the bit string 0000 1010 1001 0001 1 (spaces between the blocks of 4 bits are added for readability). The compressed or encoded version of the plaintext is then encrypted. The inner encryption algorithm is in this example also given a key and a tweak. The encrypted version of the plaintext is in this example a bit string of the same size as the compressed or encoded version of the plaintext. This encrypted version of the plaintext is decompressed or decoded in order to get a ciphertext, in this case "seaesaess", which has the same format as the plaintext; in this example, the format is defined as a text string consisting only non-capital characters in the range 'a' to 'z'. However, in this example, the ciphertext has a different size than the plaintext.

One implementation of a tweak could be to compute as hash over the key and the tweak and use the result as key for the inner encryption algorithm. Another implementation could be to compute has MAC over the tweak using the key as the MAC's key. The result or a value derived thereof can be used as key for the inner encryption algorithm. Another implementation could be to apply a block cipher where the key is used as key to the block cipher and the tweak is used as plaintext. The block ciphers result (ciphertext) or a value derived thereof could be used as key for the inner encryption algorithm.

It will thus be appreciated that, in an embodiment of the invention, the output format-preserved encrypted version of the data object (the ciphertext) may has a different size than the input data object (the plaintext). For some formats, it is an advantage that the ciphertext has a different size than the plaintext as this reduces the information leakage as explicated in the above summary of the invention.

The system illustrated in figure B-1 can be adapted to operate on plaintext of a given format and to generate ciphertext of the same format. The decompression or decoding step in format-preserving encryption can for example be constructed such that it ensures that format requirements are met in the generated ciphertext. For example, when the format to format-preserving encrypt is a text string with e-mail address format, the format-preserving encryption may be configured to handle a text string that has a '@' and that it has at least one '.' after the '@'. A trivial method to ensure this is simply to decompress or decode the encrypted version of the plaintext into a set of characters valid in an e-mail address with the exception of '@' and '.' add then insert '@' and '.' at random legal positions of the decompressed or decoded set of characters. Another method is to decompress or decode a part of the encrypted version of the plaintext into a set of characters valid in an e-mail address with the exception of '@' and '.' and decompress or decode the remaining part of the encrypted version of the plaintext into positions of where to insert '@' and '.' in the decompressed or decoded set of characters.

Generally, figures B-1 and B-2 illustrate embodiments of the first and second aspects of the invention.

Given that the data object (plaintext) is compressed in its totality, information leakage may be reduced as explicated in the above summary of the invention.

Figures B-3 and B-4 illustrates that different algorithms or different configurations of algorithms can be used as long as the decompression or decoding step used for format-preserving decryption (lower right on the figure) is the inverse of the compression or encoding step used for format-preserving encryption (upper left on the figure) and the inner decryption step in format-preserving decryption is the inverse of the inner encryption step in format-preserving encryption and the compression or encoding step used for format-preserving decryption is the inverse of the decompression or decoding step used for format-preserving encryption.

Figure B-3 illustrates that the decompression or decoding in format-preserving may not be the inverse of the compression or encoding in format-preserving encryption. Likewise, the decompression or decoding in format-preserving decryption may not be the inverse of the of the compression or encoding in format-preserving decryption.

Figure B-4 illustrates that the decompression or decoding in format-preserving may be the inverse of the compression or encoding in format-preserving encryption. Likewise, the decompression or decoding in format-preserving decryption may be the inverse of the of the compression or encoding in format-preserving decryption.

It will thus be appreciated that, in an embodiment of the invention, the steps of compressing or encoding and decompressing or decoding utilize different schemes, such as a: different configurations of a compression and decompression algorithm, b: different configuration of an encoding and decoding algorithm, c: compression used at one step and decoding used at another step, or d: encoding used at one step and decompression used at another step. Generally, utilization of a different scheme for compression or encoding and decompression or decoding has the advantage that it simplifies the design of a format-preserving encryption for variable size data objects. Constructing a compression or an encoding algorithm that can take any valid formatted data object and convert it into a form compatible with encryption and where its inverse can convert any form of the encrypted version of any plaintext into a validly formatted plaintext may often be more cumbersome than constructing two algorithms for compression/encoding and decompression/decoding, respectively.

Figure B-5 illustrates how padding can be added before the inner encryption step and/or after the inner encryption step. Padding before inner encryption may be performed to satisfy constraints imposed by the encryption algorithm (for example if the encryption algorithm only supports certain sizes of input or impose other constraints on the input). Padding may be performed to satisfy constraints imposed by the decompression or decoding algorithm (for example a minimum size). Padding may be performed to reduce correlation between size of plaintext and size of ciphertext. Padding may expand the compressed plaintext to a fixed size in order to remove correlation between size of plaintext and size of ciphertext.

It will thus be appreciated that, in an embodiment of the invention, at least one of the compressed or encoded version of the data object and the encrypted version of the data object comprises a bit string, the method further comprising padding at least one of the compressed or encoded version of the data object and the encrypted version of the data object by adding one or more bits of padding information to the at least one of the compressed or encoded version of the data object and the encrypted version of the data object prior to either one of the steps of encrypting and decompressing. Generally, utilization of padding may increase the security by reducing correlation between ciphertext and plaintext or may make the compressed or encoded version of the data object or the encrypted version of the data object compatible with encryption or decompression or decoding algorithms.

Padding may contain random data. Padding may contain predefined data. Padding may contain data derived from plaintext, key or tweak.

By padding with non-predictable data, for example random data, the overall encryption algorithm can become non-deterministic, i.e. if the same message is encrypted two times with the same key (and same tweak, if used), the output will be different (or different with a given probability, dependent on likelihood of collisions in the padding data). But still, the decryption algorithm can bring back the original plaintext. An advantage of non-deterministic encryption is that someone with access to encrypted records cannot determine if the corresponding non-encrypted records contain values that are repeated.

It will thus be appreciated that, in an embodiment of the invention, the step of encrypting and/or any preceding step is carried out to render the encrypted version of the data object non-deterministic.

By padding with predicable data or data that can repeatedly be recreated, the overall encryption algorithm can become deterministic, i.e. if the same message is encrypted two times with the same key (and same tweak, if used), the output will be the same. An advantage of deterministic encryption is that relations between data objects and data records are preserved. This can for example be an advantage if encrypted data is used as test data.

Padding algorithms are typically constructed in a way such that they can be reversed, e.g. the padding can be removed before or during the inner decryption. Padding may use a known algorithm for padding, such as ANSI X.923, ISO 10126, PKCS7, or ISO/IEC 7816-4. Padding may comprise adding one bit with the value 1 and any number of bits with the value 0 (or 1 and 0 may be swapped).

Padding may respect the format of the compressed plaintext and/or format of encryption algorithm, including binary, integer, or integer with a domain.

When decrypting a ciphertext, the padding may have to be removed before and/or after the decryption step. Most padding schemes are constructed such that the padding can be removed by means of an appropriate algorithm. In some designs of the system, padding may not need to be removed after the decryption step, for example if the compression used during encryption have embedded size information or end-of-data marker(s) in the compressed data, since the decompression during decryption then can know when it does not need to process more decrypted decompressed ciphertext.

Figure B-6 illustrates a method for ensuring that the generated ciphertext meet eventual format property constraints. If the encryption of a plaintext leads to a ciphertext not meeting a format property constraint (for example exceeds size maximum, does not contain required characters, contain illegal characters, or an e-mail address does not have a valid format, e.g. does not contain one '@' and one or more subsequent'.'), the decompression or decoding can be performed again on the encrypted compressed plaintext, but with a different decompression algorithm or decoding algorithm or with a different decompression algorithm configuration (for example a different symbol mapping) or decoding algorithm configuration. This may, if needed, be repeated based on a set of available decompression algorithms or a set of available decompression algorithm configurations. In order to ensure that the appropriate decompression algorithm or decompression algorithm configuration is used for decompression in the decryption flow as part of format-preserving decryption, it may be needed to embed information in the generated ciphertext. An example could be that if the first letter of the ciphertext is a capital letter, then decompression method 1 is used; else decompression method 2 is used.

Another method is to repeat the encryption step where the output of the previous encryption step is used as input to the next encryption step until decompression of the output of the compression step leads to a ciphertext which meets the constraints.

It will thus be appreciated that, in an embodiment of the invention, the steps of a: compressing or encoding, b: encrypting and c: decompressing or decoding are performed by use of a first set of configuration data by use of a first set of algorithms in steps a, b and c, the method further comprising the steps of: determining a format property, such as a size, of the format-preserved encrypted version of the data object; determining if the format property of the format-preserved encrypted version of the data object complies with a predetermined constraint; and if the characteristic fails to comply with the predetermined constraint: redoing at least one of steps a, b and c by use of second configuration data different from the first configuration data and/or use of second type of algorithm in at least one of steps a, b and c different from the first algorithms to obtain a new format-preserved encrypted version of the data object. Generally, utilization of redoing a step with a different configuration may allow the format-preserving encryption to respect certain constraints on format properties on the ciphertext. The step may be carried out repetitively until the predefined constraint is met.

It will thus be appreciated that, in an embodiment of the invention, the steps of a: compressing or encoding, b: encrypting and c: decompressing or decoding are performed by use of a first set of configuration data by use of a first set of algorithms in steps a, b and c, the method further comprising the steps of: determining a format property, such as a size, of the format-preserved encrypted version of the data object; determining if the format property of the format-preserved encrypted version of the data object complies with a predetermined constraint; and if the characteristic fails to comply with the predetermined constraint: applying the encryption algorithm to the encrypted version of the data object to obtain a further encrypted version of the data object, and decompressing the further encrypted compressed version of the data object to obtain a new format-preserved encrypted version of the data object. Generally, utilization of applying the inner encryption algorithm on the encryption version of the data object may allow the format-preserving encryption to respect certain constraints on format properties on the ciphertext. The inner encryption algorithm may be utilized repetitively until the predefined constraint is met.

Another method is to repeat the entire format-preserving encryption on the ciphertext of the previous application of the format-preserving encryption until the format property constraints are met.

Figure B-7 illustrates how a number (two or more) of plaintext objects can be format-preserved encrypted together. The plaintext objects are first compressed or encoded individually. Then, the results of the compression or encoding are combined using a suitable method. The combined data in processed by the inner encryption and thereafter split again. The split objects are decompressed or decoded to arrive at the ciphertext objects. Figure B-8 illustrates another method for format-preserved encryption of a number of plaintext objects together. In this method, the combination is performed before the compression or encoding. In one embodiment, the number of ciphertext objects is equal to the number of plaintext objects. In one embodiment, each ciphertext object has the same format as a corresponding plaintext object. In one embodiment, the type of at least one of the ciphertext objects and corresponding plaintext objects have a fixed-size format and the split step has been designed such that it ensures that the fixed-size ciphertext objects will have the appropriate size. In one embodiment, padding data is added before or after inner encryption.

An integrity check value (also known as authentication data) may be embedded into the ciphertext by the format-preserving encryption to allow verification of the integrity of the ciphertext as part of the format-preserving decryption or independent of the format-preserving decryption. Figure B-9 illustrates how the integrity check value can be appended or integrated at any step. The integrity check value may be computed as a MAC (message authentication code) fully or partly computed on plaintext or data derived from the plaintext. The key to the MAC may be the same key as used for encryption or derived from the encryption key or from a key where the encryption key is also derived. The integrity check value may be derived from a hash function fully or partly computed on plaintext or data derived from the plaintext.

Figure B-10 illustrates encryption with embedded integrity check information. In the left side of the figure, the plaintext is processed by a MAC function given a key. The output from the MAC function is then further processed to extract n bits of information. In the right side of the figure, the plaintext is compressed or encoded and padding is added to the compressed or encoded plaintext. This padding includes the n bits extracted from the result of the MAC function. This padded compressed plaintext is encrypted, further padded and decompressed or decoded in order to arrive at the ciphertext. The key used for MAC computation may be the same or different from the key used for inner encryption. The key used for MAC computation may be derived (fully or in part) from another key; the key used for inner encryption may be derived (fully or in part) from the same other key.

It will thus be appreciated that, in an embodiment of the invention, adding authentication data to at least one of the data object, the compressed or encoded version of the data object, the encrypted version of the data object, and the format-preserved encrypted version of the data object; and
authenticating at least one of the data object, the compressed version of the data object, the encrypted version of the data object, and the format-preserved encrypted version of the data object by verifying the authentication data added during the further operations. Generally, utilization of embedded authentication data enhances security be allowing the receiver of an encrypted data object to verify if the data object is authentic or if it has been tampered.

Figure B-11 illustrates a method for compressing or encoding a text string formatted as an e-mail address where the text string is first split at the '@' and thereafter split at the subsequent'.' (one or more). In this example, the splits lead to three text strings, which are compressed or encoded individually. The compressed or encoded text strings are then combined to get an encoded set of data which can be encrypted using an inner encryption algorithm. The entire process of compressing or encoding and combining should be executable in a reversible manner. The reversibility can for example be ensured by encoding EOD markers during the compression or encoding steps (may be omitted from one), such that, during decompression or decoding, it can be determined when one substring ends and the next begins. Another method could be to include compressed or encoded size information. In this example, it is straight forward to assemble the substrings into the plaintext in when the encoding is reversed, simply by taking the first substring, a '@' and the second substring and combine them. To that intermediate string, '.' and the next substring is appended (repeatedly if the plaintext has several'.' after the '@').

Figure B-12 illustrates a method for compressing or encoding a text string formatted as an e-mail address where the text string is first split at the '@' and thereafter split at the subsequent'.' (one or more). In this example, the splits lead to three text strings, which are combined before being compressed or encoded in order to get the encoded set of data.

Figure B-13 illustrates how format properties, such as the positions of '@' and '.', can be compressed and encoded and then combined with the compressed or encoded version of the substrings in order to achieve the encoded set of data.

It will thus be appreciated that, in an embodiment of the invention, the data object comprises a plurality of characters, and wherein the step of compressing or encoding utilizes a scheme which maps one or more of the characters into a mapped partial output, and wherein the scheme is configured to identify at least one predetermined format property of the data object, and wherein the scheme is further configured to map the one or more characters and the format property, so as to render the compressed or encoded version of the data object dependent from the one or more characters and the at least one format property. Generally, compressing or encoding format properties allows for compressing or encoding data objects of complex structures.

Figure B-14 illustrates format-preserving encryption of a data object of a predefined format, in this example the e-mail address "name@domain.com". The format of an e-mail address is characterized by being a text string containing: 1. One or more characters, numbers, or certain symbols. 2. One '@', 3. One or more (typically two or more) text strings of characters separated by'.'. The entire e-mail address is encoded character-by-character into a bit string using a reversible encoding which can accept any character which is legal in the format of an e-mail address, including '@' and '.'. The encoded e-mail address bit-string is appended by a number of padding bits. The padded encoded e-mail address is encrypted using an inner encryption algorithm given a key and optionally a tweak. The encrypted padded encoded e-mail address is decoded into a text string having a valid e-mail address format using an appropriate decoding algorithm. This decoding algorithm is constructed such that it ensures that the e-mail address contains exactly one '@' and at least one '.' after the '@' where each '@' and '.' have at least one character on both sides. Decryption of the encrypted e-mail address can be performed by first decoding the encrypted e-mail address into a bit string. This bit string is decrypted and the padding is removed. This bit string is then encoded in order to arrive at the plaintext e-mail address.

Figure B-15 illustrates an example of a first step of a decoding algorithm for decoding a bit string into a test string having a valid e-mail address format. The first two bits of the bit string used to select a pattern for where to insert '@' and '.'. using a pattern selector table as illustrated in figure B-16. The remaining bits of the bit string are decoded into a text string containing characters which are valid at any position at an e-mail address. Finally, '@' and '.' are inserted into the decoded text string according to the pattern as illustrated in figure B-17 in order to form a text string having a valid e-mail address format. To encode this text string back into a bit string, the positions of the '@' and '.' symbols in the text string are determined and using the table in figure B-16, the first two bits of the bit string are recovered. The text string excluding the '@' and '.' are then encoded and the result of this decoding is appended to the first two bits already encoded in order to obtain the resulting encoded bit string.

An alternative decoding algorithm could simply decode the entire bit string into a test string and then insert a '@' and thereafter a '.' into the test string at any random or predefine positions in order to give it a valid e-mail address format. To encode this string back into a bit string, the '@' and '.' are first discarded. Thereafter, the remaining text string is encoded into a bit string.

The encoding used in the encryption process may not be able to generate all possible bit strings. And likewise, the decoding used in the decryption process may not be able to decode all possible bit strings. But the decoding used in the decryption process should be able to decode any bit string generated by the encoding in the encryption process. And the encoding used in the encryption process should be able to encode any plaintext adhering to the specified format of the plaintext. The decoding in the encryption process may not be able to generate all possible ciphertexts. And likewise, the encoding used in the decryption process may not be able to decode all possible ciphertexts. But the encoding used in the decryption process should be able to encode any ciphertext generated by the decoding in the encryption process.

Figure B-18 illustrates an example of format-preserving encryption of an e-mail address. First, plaintext string is split at the '@'. The substrings before and after '@' are compressed or encoding using different mapping tables since the definitions of legal characters are different before and after'@'. The part after'@' may even be converted to lower-case-only before compression or encoding since that part is not case-sensitive in an e-mail address. The compression or encoding algorithm processing the part after'@' may be able to recognize common substrings, such as "gmail", "yahoo", "hotmail", and ".com", and map these into one compressed or encoded symbol. The encoded versions of at least one of the strings may include size information or EOD marker to guide a decompression or decoding step performed during format-preserving decryption where to split the two substrings. The two substrings are then combined and padding may be added. The result is then encrypted using the inner encryption algorithm. The output of encryption may be further padded to ensure compatibility with decompression or decoding. Finally, a decompression or decoding method is applied, this method is constructed such that it is guaranteed that the output ciphertext has a legal e-mail format.

Figure B-19 illustrates how format-preserving encryption may be used to convert data from a production IT system (potentially being personally identifiable information and/or confidential information) into test data to be used in a non-production IT system. The format-preserving encryption can ensure that privacy and confidentiality will not be compromised by this operation.

Figure B-20 illustrates an example of format-preserving encryption where the plaintext where the plaintext can belong to one of a predefined set of format groups. Format groups can for example be different formats of a person's name; one group being names containing Latin letters, a second group containing Arabic letters and third group containing Chinese letters. Another example of format groups is that the explicit format of a data record it not known; it may have one of several formats, the plaintext can for example hold either an e-mail address, a person's name, or an address. In the example, the first step is to detect which format group matches the plaintext. Thereafter, the plaintext is processed by the appropriate configured compression or encoding algorithm, padding is added, and the result is processed by the inner encryption algorithm. The encrypted version of the plaintext is then decompressed or decoded, often with a configuration equivalent to the one used for compression or encoding such that the ciphertext belong to the same format group as the plaintext. There may be applications, however, where it is not desirable that the ciphertext belong to the same format group as the plaintext; in that case the encrypted version of the plaintext may always be decompressed or decoded into the same format group or the format group may be chosen at random or derived from the encrypted version of the plaintext, e.g. by decompressing or decoding a part of the encrypted version of the plaintext.

Format-preserving encryption and format-preserving decryption of an e-mail address is illustrated in figure B-21. The e-mail address represented by the text string "name@domain.com" is processed by the encryption algorithm using a key into the encrypted test string "eoz@pgmygaf.nem". The encrypted text string is a valid formatted e-mail address but the original e-mail address cannot be derived from the encrypted string without knowing the key used in the encryption step.

Format-preserving encryption under two different keys is illustrated in figure B-22. Even though the same e-mail address is given as input to the same encryption function, the encrypted text strings are different since the two encryption operations used different keys.

Format-preserving encryption may also depend on a tweak. The tweak is given as input to the encryption algorithm together with the key. As illustrated in figure B-23, if the same input is provided, in this example "name@domain.com", this results in different outputs if the tweaks are different even if the keys are the same. In contrast to a key, a tweak may in many applications be known to an adversary without compromising the system's security. "Tweak" is similar or related to the terms "initialization vector", "IV", salt or "nonce" in many texts. An example of an encryption setup using tweak is illustrated in figure B-24, where two data objects named "Name" and "City" are to be encrypted. The data object named "Name" is encrypted under the key named "Key2" into "Encrypted Name". The data object named "City" is encrypted under "Key1" and using "Name" as tweak into "Encrypted City". As a consequence, if two data records have the data objects "Name" and "City" where "Name" are different, "Encrypted City" will be different for the two encrypted data records even if the values of "City" in the non-encrypted data records are the same. An alternative setup could be that "Encrypted Name" is used as tweak instead of "Name". A record ID, such as a database primary key, may also be used as a tweak. A date and/or time may also be used as a tweak.

Figure B-25 illustrates 3 data records with each 4 data objects resulting in a total of 12 data objects. In the example, the 4 data objects per data records are named "First name", "Last name", "E-mail address" and "Phone number". The data records may for example be rows in a database table or view, objects in a structured or semi-structured file format or data records stored in memory. The data records may for example be represented in the C++ programming language as a struct or as a class or in the Java programming language as a class.

Records may be nested, i.e. one field in one record may contain a data object which in itself is a data record containing data objects, etc.

It will thus be appreciated that, in an embodiment of the invention, the data object has been derived from a data record comprising the data object and at least one associated data object, and wherein at least one of the steps of a: compressing or encoding, b: encrypting, c: padding and d: decompressing or decoding depends on at least a portion of the associated data object or data derived from at least a portion of the associated data object. Generally, utilization of a tweak enhances cryptographic strength since it can ensure that if two data objects related to two different data records have the same values, the encrypted versions of the two data objects have different values. Thus, an adversary having access to the encrypted data cannot determine that the plaintext versions of the two data objects had the same value.

Some textual or numerical data formats have a fixed size. Example of fixed-size data formats are credit card numbers, social security numbers, bank account numbers, phone numbers, and postal codes. Note, however, that all these examples only have a fixed size within certain restrictions, typically geographical restrictions. For example, a US postal code may consist of five digits or alternatively five digits followed by a '-' and four digits whereas a UK postal code consists of two to four alphanumeric characters, a space and three alphanumeric characters. The fixed-size data formats mentioned, with the exception of credit card numbers, typically have different sizes in different countries. For credit card numbers, the size is often 16 digits, but some issuers use fewer and some use more digits. In reality, credit card numbers can be between 12 and 19 digits long. Thus, an information processing or storage system utilized in embodiments of the present invention may in reality treat data of these formats as variable-size in order to be able to handle any possible format.

Some textual or numerical data formats have a variable size. Examples are names, addresses, e-mail addresses, web site URLs, labels, monetary amounts, IP numbers, XML data, JSON data, and free texts. Some of these formats put requirements on the text characters, digits and/or special characters digits contained in the data object. For example, an e-mail address must contain a '@' as well as at least one '.' after the '@'. Another example is that most information processing or storage systems impose limits on the size of the data objects.

Data objects may also be of binary nature like for example a file containing a file or a compressed archive or encrypted information. Binary data objects may be stored directly in files or as binary objects in databases or within data records or converted to text form (for example via hexadecimal encoding or base64 encoding). Binary data converted or encoded to text may be used in similar as other textual data.

In some information processing or storage applications, some or all data objects may be empty or may hold the value null to indicate that the data object is not populated.

In one embodiment of the present invention, a structured or semi-structured file or data object, such as XML or JSON, is encrypted using format-preserving encryption. The method may for example be constructed such that element content and attribute values are encrypted but overall file structure, element tags and attribute keys/names are not altered. In one embodiment, only element content of certain element types / elements with certain names or only attribute values of certain types of attributes / attributes with certain keys/names are encrypted.

A conventional block cipher as illustrated in figure B-26 takes a block of a fixed size, usually 128 bits, as input and encrypts it into a block of the same size. The un-encrypted input is typically called plaintext and the encrypted output is usually called ciphertext. The block cipher also takes a key as input, typically with a size of between 128 bits and 256 bits. The block cipher can decrypt the ciphertext into the original plaintext provided that the same key is given to the decryption algorithm as was given to the encryption algorithm.

Some block ciphers have a configurable block size such that the user of the algorithm can choose the size of the plaintext and ciphertext. There may be some constraints to the block size, for example a minimum size, a maximum size and/or that the size has to be a multiple of for example 2.

Some block ciphers have plaintext and ciphertext which are integers within a certain domain. For example, if the domain is defined as 0 to 999, any integer number between 0 and 999 (both included) can be given as plaintext and the encryption algorithm will then give a ciphertext also in the domain from 0 to 999. The domain may be configurable. There may be some constraints to the domain, for example a minimum number of numbers in the domain, a maximum number of numbers in the domain, that the number of numbers in the domain must be a multiple of for example 2, that the number of numbers must be a power of 2, and/or that it can be factorized into two factors of similar size. Block ciphers operating on a domain may be suitable to operate on output of the compression algorithm illustrated in figures B-34 to B-37.

In one embodiment of the present invention, the inner encryption algorithm comprises a block cipher.

In one embodiment of the present invention, the inner encryption algorithm is a public key encryption algorithm, such as RSA.

Data compression is the art of representing a data object in a compact way. Data compression can be either lossless or lossy. In lossless compression, the exact original data object can be restored upon decompression whereas in lossy compression, only an approximate data object can be restored upon decompression. Lossy compression is often used for compression audio/video content as the lost details often can be accepted and since the greater compression ratio typically offered by lossy compression is typically required in order to compress the audio/video data down to an acceptable size.

One method for lossless data compression is Huffman coding. In Huffman coding, a mapping table is constructed between input symbols and their encoded representation where the encoded representations typically have different size. The mapping table is typically arranged such that frequent symbols are encoded into shorter representations whereas less frequent symbols are encoded into longer representations.

For use in the present invention, Huffman mapping tables or other compression/encoding procedures may be constructed with priorities other than to minimize the size of their output. For example, compression/encoding procedures may be tailored to output data having unpredictable size. The mapping tables may, for example, be generated on the basis of a cryptographic procedure such that the mapping table depends on a key. This dependency may for example be achieved by feeding the key as seed to a pseudo-random number generator and then use data generated by the pseudo-random number generator to define the mapping table or part thereof. A construction where the mapping table depends on a key may have the advantage that the mapping table is unknown to an adversary which may contribute to further security of the solution.

Different parts of a data object may be compressed using different mapping tables. For example, when compressing an e-mail address, the part before '@' may be compressed using a mapping table which preserves is letters are capital letters or non-capital letters whereas the part after'@' may be compressed using a mapping table which is not case-sensitive, since domain names are not case-sensitive. The switch between the mapping tables can happen seamlessly simply by monitoring if a '@' has been encountered while processing the data object.

The symbols in the mapping table may for example consist of individual characters, sequences of characters, an end-of-data marker (sometimes referred to as EOD), properties (e.g. a character string's size) or a combination of any of these. In case several data objects or several distinct parts of a data objects are coded together, it may be beneficial to either encode information about the objects' or parts' sizes or to insert an end-of-data marker at the end of each object or part to indicate where an object or part ends and the next starts.

As an example, we will encode the text string "message" using the mapping table in figure B-27. The encoding is illustrated in figure B-28. 'm' is encoded as 0000, 'e' is encoded as 1, etc. The resulting encoded version of'message' becomes the bit string 00001010100100011.

Decoding a bit string into the original object can be performed either by searching the mapping table (as illustrated in figure B-27) for symbols matching the bits of the bit string. An alternative method is to build a tree from the information in the mapping table as illustrated in figure B-29. In this tree, each symbol is decoded by starting at the left and moving step-by-step to the right by going up if the next bit is 0 and going down if the next bit is 1 until a symbol has been reached. In this way, 0000 becomes 'm', 1 becomes 'e', 01 becomes s, etc.

For more information, see Huffman, D. (1952). "A Method for the Construction of Minimum-Redundancy Codes".

The mapping tables may be predefined. The mapping tables may be derived from some information known both at time of encoding and time of decoding. The mapping tables may be adaptive as explained in J. S. Vitter, "Design and Analysis of Dynamic Huffman Codes", Journal of the ACM, 34(4), October 1987, pp 825-845 and Donald E. Knuth, "Dynamic Huffman Coding", Journal of Algorithm, 6(2), 1985, pp 163-180.

Another method for lossless data compression is Arithmetic Coding, where symbols are encoded into intervals of rational numbers. A mapping table is constructed between input symbol and a rational number interval as illustrated in figures B-30 and B-31. As an example, we will encode the text string "pizza" using this mapping as illustrated in figure B-32. The first character, 'p', is encoded as a rational number in the interval 0.4 to 0.6. To encode the next character, 'i', the interval in figure B-31 is scaled to fit in the interval 0.4 to 0.6. The character sequence "pi" is thus encoded as the rational number interval 0.44 to 0.48. This algorithm is repeated until all characters has been encoded. In this way, "pizza" becomes the interval 0.47360 to 0.47488. To convert this interval into a binary representation, the interval is first converted from decimal form to binary form as illustrated in figure B-33. The shortest binary rational number to fit in the range is 0.011110011, from which the heading zero and dot are removed. The resulting binary encoding of "pizza" this way become 011110011. Decoding is performed by converting the binary encoding back into a rational number (0.011110011 becomes 0.474609375) and then walking through figure B-32 from left to right again where the rational number decide which characters to decode and thus how to scale the interval in figure B-31.

For more information, see Witten, Ian H.; Neal, Radford M.; Cleary, John G. (June 1987). "Arithmetic Coding for Data Compression".

Another method for compression uses integer numbers can be constructed by operating with two variables named value and domain in integer form. A design of a mapping table to encode "message" is illustrated in figure B-34. The characters are distributed as fractions. Often different denominators will be used and often the most common symbols will be given the least denominators in order to grant them a larger part of the encoding space. A mapping table is then constructed by using the denominator describing the granted part of the encoding space as "encoded domain" and the numerator as "encoded value" as illustrated in figure B-35. Figure B-36 shows how "message" is then encoded. For each symbol, the encoded value and encoded domain are looked up in the mapping table. Value and Domain are then computed. Value is the previous value multiplied by Encoded Domain and added with Encoded Value. Domain is the previous value of Domain multiplied by Encoded Domain. The initial values of Value and Domain are 1. In this example, "message" is encoded into the value 53643 in the domain 59049 (i.e. 0 to 59048, both inclusive).

The value 53643 in the domain 59049 can be decoded as illustrated in figure B-37. The fraction 53643/59049 corresponds to the symbol 'm' in figure B-34 since it is larger than or equal to 8/9 and less than 1. This is written in the first line of figure B-37. The Domain in the next line is the Domain from the line above divided by the Encoded Domain. The Value of the next line is the Value of the live above minus the Domain multiplied by numerator of the Fraction of the line above (i.e. 53643 - (8*6561)). This algorithm is repeated until the Domain reaches 1. In this way, "message" has been decoded.

It will thus be appreciated that, in an embodiment of the invention, at least one of the compressed or encoded version of the data object and the encrypted version of the data object comprises a pair of integers representing a domain variable and a position variable, wherein the position variable represents a value within a range of possible values defined by the domain variable. Generally, compressing or encoding a data object into a pair of integers representing a domain variable and a position variable is a method allowing for converting a data object of virtually any format to be converted into a format which can be encrypted or decrypted using an encryption algorithm capable of processing a position variable within a domain.

Padding can be applied to the pair of integers by increasing the domain variable and eventually also modifying the value variable appropriately. The modification to the domain variable may reflect padding inserted in binary padding.

Mapping tables for encoding may contain more than characters. Figure B-38 illustrate a Huffman mapping table containing 5 single-character symbols along with 2 multi-character symbols and two control symbols (EOD is end-of-data marker and Repeat last means repeat last symbol). Using this mapping table, the test string "mee@gmail.com" would be encoded into 11111-1101-00-11101-100-101-01.

It will thus be appreciated that, in an embodiment of the invention, the data object comprises a plurality of characters, and wherein the step of compressing or encoding utilizes a scheme which maps one or more of the characters into a mapped partial output, and wherein the scheme is configured to identify at least one predetermined character sequence within the data object and to map any identified such predetermined character sequence into a predetermined value representing the mapped partial output. Generally, compressing or encoding character sequences can allow the compressed or ecoded version of the data object to be more compact which may facilitate less correlation between size of input and size of output and/or allow for eventual size overhead imposed by for example padding, encryption or adding authentication data without the ciphertext version becoming too big.

The encoded values, encoded intervals or encoded value and domain in mapping tables may be defined dependent on a key such that the way the algorithms compress and/or decompress changes as the key changes. Key-dependent mapping tables may be used to increase the security of the encryption method. For example, key-dependent decompression during encryption (and corresponding key-dependent compression during decryption) may make it harder for an attacker to determine and revert the padding added after the encryption step.

In preferred embodiments of the present invention, the terms "encoding" and "decoding" are distinctive relative to the terms "compression" and "decompression", in that encoding and decoding algorithms use a mapping table with fixed-size encoded symbols whereas compression and decompression algorithms use a mapping table with variable-size encoded symbols. Figure B-38 illustrates a mapping table for compression (the "encoded" column have variable sized value) whereas figure B-39 illustrates a mapping table for encoding (the "encoded" column have value with same size).

In one embodiment of the present invention, an encoding algorithm is configured such that some encoded values are not utilized as illustrated in figure B-39, where a message to encode is using an alphabet containing the letters "a" to "f". As a consequence, some encoded value will not appear in an encoded version of a data object (the binary values 110 and 111 in the example). Because of this, some bit string are not valid encoded bit strings as the encoder would never generate these bit strings (if non-used encoded values appear in the bit strings). If one attempts to decode an invalid bit string, the decoder will not know how to represent the non-used encoded values as a symbol and the decoding should thus fail.

In one embodiment of the present invention, a decoding algorithm is configured such that some otherwise valid symbols will are not utilized as illustrated in figure B-40, where the encoded bit string to decode is split into two-bit components which will then be decoded. As two bits can represent four values (00, 01, 10, and 11), two symbols of the used alphabet of 6 letters "a" to "f" are not used ("e" and "f" in this example).

One variant of encoding using a fixed-size output could be to use the method illustrated by figure B-35 but to have a fixed encoded domain.

One advantage of using a compression algorithm to convert for example a text string of a given format into a bit string is that it can often generate a shorter bit string than the simpler encoding. One advantage of using a compression algorithm to convert for example a text string of a given format into a bit string is that the compression algorithm is not bound on any constraints to the size of the number of encoded values are illustrated in figures B-39 and B-40.

In the following example, the input/plaintext and output/ciphertext have the same format but some restrictions are imposed on the ciphertext format.

Example: In case the input/plaintext is provided in a format which allows Unicode characters (i.e. character set which includes a wide range of characters in extend to the original US ASCII character sets, such as Russian, Arabic or Hebrew letters) but the encryption system enables the encrypted messages to use only a restricted subset of the total character set (e.g. use only ASCII characters) but still allows that the plaintext data may contain characters outside of the ASCII character set.

In this case, the solution may encompass encryption where the encoding/compressing step uses an algorithm supporting the entire Unicode character set (or a relevant subset thereof) but the decoding/decompression step only supports ASCII characters.

Application example: A database of North-American users. The vast majority of name entries in the database only uses ASCII characters. But few name entries use characters outside of the ASCII char set. If the encryption should support the entire Unicode character range, it would (in the simple/naive implementation) use all possible output characters with an even distribution. Thus, non-ASCII characters would be very dominant in the encrypted version (since ASCII characters in count of different characters in a very small subset of the total set of available characters). This would be a contrast the non-encrypted data, where non-ASCII characters were almost non-existing.

In a more generalized version, one configuration may be used for encoding/compression and another for decoding/decompression (swapped for decryption, as shown in fig. 3). This setup may even be used to convert from one format to another format. For example, plain text may be an e-mail, and the cipher text may be a person's name. This technique is sometimes called format-transforming encryption - the encryption transforms from one format (e.g. name using the entire Unicode character set) into another format (e.g. name restricted to ASCII character set). The scope of protection for the invention is limited by the attached claim set.

## Claims

1. A computer-implemented method of performing Feistel-network-based block-cipher encryption of plaintext, the method implementing a block cipher algorithm based on two or more of tracks and on one or more S-boxes, the method comprising the steps of:
- splitting the plaintext into plaintext portions, wherein the number of plaintext portions is equal to the number of tracks, wherein each plaintext portion has a portion size, and wherein the sum of all of the portion sizes is equal to the size of the plaintext;
- defining respective initial values of each of the tracks on the basis of respective corresponding plaintext portions;
- iterating the Feistel network a number of times by updating track values on the basis of one or more S-box outputs;
- combining the respective resulting outputs of each track of the Feistel network to obtain an encrypted version of the plaintext as ciphertext;
**characterised in that**
the block cipher is adjustable to fit the size of the plaintext, wherein the size of the plaintext determines the number of plaintext portions and the size of the individual plaintext portions;
the size of the input for the S-box of each track of the block cipher is at least equal to the portion size of the plaintext portion fed into the S-box; and
wherein the plaintext is not divided prior to the step of splitting the plaintext into plaintext portions, and wherein each plaintext portion is not split further prior to the steps of defining respective initial values of each of the tracks and iterating the Feistel network.

2. A method according to claim 1, wherein the plaintext portions are processed in the tracks, even if some of the plaintext portions have a portion size smaller than the size of the input for the S-box of the block cipher.

3. A method according to claim any of the preceding claims, wherein at least two of the two or more tracks have different sizes.

4. A method according to any of the preceding claims, wherein a subkey is further fed into the S-box, and wherein the subkey has the same size as the input of its corresponding S-box.

5. A method according to any of the preceding claims, wherein values in the S-boxes are based on pseudo-random data generated by at least one cryptographic algorithm.

6. A method according to any of the preceding claims, wherein, in the Feistel network, the track values are updated by at least one of the operations
- XOR,
- addition modulus and
- subtraction modulus.

7. A method according to any of the preceding claims, wherein at least two of the iterations of the Feistel network are based on different S-boxes.

8. A method according to any of the preceding claims, further comprising the step of determining sizes of each of the tracks of the Feistel network by factorizing the size of the plaintext, and distributing the factorized sizes to the tracks according to a pre-determined distribution key.

9. A method according to any of the preceding claims, further comprising generating a subkey dependent on at least one of
- a key,
- a tweak, and
- the plaintext size,
where the subkey is applied to the input to at least one of the S-box lookups by means of one of the operands
- XOR,
- addition modulus, and
- subtraction modulus.

10. A method according to any of the preceding claims, comprising:
- providing an input file;
- identifying within the input file at least one data object for encryption and an amount of data which is not for encryption;
- defining the at least one data object as said plaintext for encryption according to any of the preceding claims;
subsequent to the step of combining the respective resulting outputs of each track of the Feistel network to obtain an encrypted version of the plaintext as ciphertext:
- generating an output file comprising the amount of data not for encryption in its original non-encrypted format and the ciphertext obtained by encryption of the at least one data object, wherein the output file does not include the non-encrypted version of the at least one data object.

11. A method according to claim 10, further comprising:
- identifying a position, within the input file, of the data object;
- positioning the ciphertext in the output file so that the ciphertext appears at the same position in the output file as the position of the data object in the input file.

12. A method according to any of the preceding claims, wherein the plaintext has a predetermined format, and wherein the method is format-preserving, so that the encrypted version of the plaintext has the same predetermined format.

13. A computer-implemented method of encrypting an input file by Feistel-network-based block-cipher encryption of plaintext derived from the input file, the method implementing a block cipher algorithm based on two or more of tracks and on one or more S-boxes, wherein each of the S-boxes is configured to receive an input of a predetermined input size, the method comprising the steps of:
- identifying within the input file at least one data object for encryption and an amount of data which is not for encryption;
- defining the at least one data object as said plaintext for encryption by the block cipher algorithm;
- determining a size of the plaintext;
- determining if the size of the plaintext exceeds the predetermined input size of the one or more S-boxes;
if the size of the plaintext exceeds the predetermined input size of the one or more S-boxes:
- splitting the plaintext into plaintext portions, wherein the number of plaintext portions is equal to the number of tracks, wherein each plaintext portion has a portion size, and wherein the sum of all of the portion sizes is equal to the size of the plaintext, and wherein each portion size is smaller than or equal to the predetermined input size of the one or more S-boxes, and wherein the plaintext is not divided prior to the step of splitting the plaintext into plaintext portions, and wherein each plaintext portion is not split further prior to the steps of defining respective initial values of each of the tracks and iterating the Feistel network;
- defining respective initial values of each of the tracks on the basis of respective corresponding plaintext portions;
if the size of the plaintext does not exceed the predetermined input size of the one or more S-boxes:
- defining respective initial values of each of the tracks on the basis of the plaintext;
- iterating the Feistel network a number of times by updating track values on the basis of one or more S-box outputs;
- combining the respective resulting outputs of each track of the Feistel network to obtain an encrypted version of the plaintext as ciphertext;
and subsequently:
- generating an output file comprising the amount of data not for encryption in its original non-encrypted format and the ciphertext obtained by encryption of the at least one data object, wherein the output file does not include the non-encrypted version of the data object.

14. A method according to claim 13,
wherein the at least one data object for encryption has a predetermined format, and wherein the Feistel network is format-preserving, so that the ciphertext has the same predetermined format.

15. A method according to claim 13 or 14, further comprising:
- identifying a position, within the input file, of the at least one data object;
- positioning the ciphertext in the output file so that the ciphertext appears at the same position in the output file as the position of the at least one data object in the input file.

## Patentansprüche

1. Computerimplementiertes Verfahren zur Durchführung einer Feistelnetzwerk-basierten Blockchiffrierverschlüsselung von Klartext, wobei bei dem Verfahren ein Blockchiffrieralgorithmus angewendet wird, der auf zwei oder mehr Spuren und auf einer oder mehreren S-Boxen basiert, wobei das Verfahren die Schritte umfasst:
- Aufteilen des Klartextes in Klartextabschnitte, wobei die Anzahl der Klartextabschnitte gleich der Anzahl der Spuren ist, wobei jeder Klartextabschnitt eine Abschnittsgröße aufweist und wobei die Summe aller Abschnittsgrößen gleich der Größe des Klartextes ist;
- Definieren jeweiliger Anfangswerte jeder der Spuren auf der Basis jeweiliger entsprechender Klartextabschnitte;
- Iterieren des Feistelnetzwerks für mehrere Male durch Aktualisieren von Spurwerten auf der Basis einer oder mehrerer S-Box-Ausgaben;
- Kombinieren der jeweiligen resultierenden Ausgaben jeder Spur des Feistelnetzwerks, um eine verschlüsselte Version des Klartextes als chiffrierten Text zu erhalten;
**dadurch gekennzeichnet, dass**
die Blockchiffrierung einstellbar ist, um zu der Größe des Klartextes zu passen, wobei die Größe des Klartextes die Anzahl der Klartextabschnitte und die Größe der einzelnen Klartextabschnitte bestimmt;
die Größe der Eingabe für die S-Box jeder Spur der Blockchiffrierung mindestens gleich der Abschnittsgröße des Klartextabschnitts ist, der der S-Box zugeführt wird; und
wobei der Klartext nicht vor dem Schritt des Aufteilens des Klartextes in Klartextabschnitte geteilt wird und wobei jeder Klartextabschnitt vor den Schritten des Definierens jeweiliger Anfangswerte jeder der Spuren und des Iterierens des Feistelnetzwerks nicht weiter aufgeteilt wird.

2. Verfahren nach Anspruch 1, wobei die Klartextabschnitte in den Spuren verarbeitet werden, auch wenn einige der Klartextabschnitte eine Abschnittsgröße aufweisen, die kleiner ist als die Größe der Eingabe für die S-Box der Blockchiffrierung.

3. Verfahren nach einem der vorhergehenden Ansprüche, wobei mindestens zwei der zwei oder mehr Spuren unterschiedliche Größen aufweisen.

4. Verfahren nach einem der vorhergehenden Ansprüche, wobei der S-Box ferner ein Unterschlüssel zugeführt wird und wobei der Unterschlüssel die gleiche Größe aufweist wie die Eingabe seiner entsprechenden S-Box.

5. Verfahren nach einem der vorhergehenden Ansprüche, wobei Werte in den S-Boxen auf Pseudozufallsdaten basieren, die durch mindestens einen kryptographischen Algorithmus erzeugt werden.

6. Verfahren nach einem der vorhergehenden Ansprüche, wobei in dem Feistelnetzwerk die Spurwerte durch mindestens eine der folgenden Operationen aktualisiert werden:
- XOR,
- modulare Addition und
- modulare Subtraktion.

7. Verfahren nach einem der vorhergehenden Ansprüche, wobei mindestens zwei der Iterationen des Feistelnetzwerks auf unterschiedlichen S-Boxen basieren.

8. Verfahren nach einem der vorhergehenden Ansprüche, ferner umfassend den Schritt des Bestimmens von Größen jeder der Spuren des Feistelnetzwerks durch Faktorisieren der Größe des Klartextes und des Verteilens der faktorisierten Größen auf die Spuren gemäß einem vorgegebenen Verteilungsschlüssel.

9. Verfahren nach einem der vorhergehenden Ansprüche, ferner umfassend Erzeugen eines Unterschlüssels in Abhängigkeit von mindestens einem aus
- einem Schlüssel,
- einem Tweak und
- der Klartextgröße,
wobei der Unterschlüssel auf die Eingabe in mindestens eine der S-Box-Lookups mittels eines der folgenden Operanden angewendet wird:
- XOR,
- modulare Addition und
- modulare Subtraktion.

10. Verfahren nach einem der vorhergehenden Ansprüche, umfassend:
- Bereitstellen einer Eingabedatei;
- Identifizieren mindestens eines Datenobjekts zur Verschlüsselung und einer Menge an Daten, die nicht zur Verschlüsselung vorgesehen sind, innerhalb der Eingabedatei;
- Definieren des mindestens einen Datenobjekts als den Klartext zur Verschlüsselung gemäß einem der vorhergehenden Ansprüche;
anschließend an den Schritt des Kombinierens der jeweiligen Ausgaben jeder Spur des Feistelnetzwerks, um eine verschlüsselte Version des Klartextes als chiffrierten Text zu erhalten:
- Erzeugen einer Ausgabedatei, welche die Menge an Daten, die nicht zur Verschlüsselung vorgesehen sind, in ihrem ursprünglichen nichtverschlüsselten Format und den durch Verschlüsselung des mindestens einen Datenobjekts erhaltenen chiffrierten Text aufweist, wobei die Ausgabedatei nicht die unverschlüsselte Version des mindestens einen Datenobjekts umfasst.

11. Verfahren nach Anspruch 10, ferner umfassend:
- Identifizieren einer Position des Datenobjekts innerhalb der Eingabedatei;
- Positionieren des chiffrierten Textes in der Ausgabedatei derart, dass der chiffrierte Text in der Ausgabedatei an derselben Position wie der Position des Datenobjekts in der Eingabedatei erscheint.

12. Verfahren nach einem der vorhergehenden Ansprüche, wobei der Klartext ein vorgegebenes Format aufweist und wobei das Verfahren formatbewahrend ist, derart, dass die verschlüsselte Version des Klartextes das gleiche vorgegebene Format aufweist.

13. Computerimplementiertes Verfahren zum Verschlüsseln einer Eingabedatei durch Feistelnetzwerk-basierte Blockchiffrierverschlüsselung von Klartext, der aus der Eingabedatei abgeleitet ist, wobei bei dem Verfahren ein Blockchiffrieralgorithmus angewendet wird, der auf zwei oder mehr Spuren und auf einer oder mehreren S-Boxen basiert, wobei jede der S-Boxen zum Empfangen einer Eingabe einer vorgegebenen Eingabegröße konfiguriert ist, wobei das Verfahren die Schritte umfasst:
- Identifizieren mindestens eines Datenobjekts zur Verschlüsselung und einer Menge an Daten, die nicht zur Verschlüsselung vorgesehen sind, innerhalb der Eingabedatei;
- Definieren des mindestens einen Datenobjekts als den Klartext zur Verschlüsselung durch den Blockchiffrieralgorithmus;
- Bestimmen einer Größe des Klartextes;
- Bestimmen, ob die Größe des Klartextes die vorgegebene Eingabegröße der einen oder der mehreren S-Boxen übersteigt;
wenn die Größe des Klartextes die vorgegebene Eingabegröße der einen oder der mehreren S-Boxen übersteigt:
- Aufteilen des Klartextes in Klartextabschnitte, wobei die Anzahl der Klartextabschnitte gleich der Anzahl der Spuren ist, wobei jeder Klartextabschnitt eine Abschnittsgröße aufweist und wobei die Summe aller Abschnittsgrößen gleich der Größe des Klartextes ist und wobei jede Abschnittsgröße kleiner oder gleich der vorgegebenen Eingabegröße der einen oder der mehreren S-Boxen ist und wobei der Klartext nicht vor dem Schritt des Aufteilens des Klartextes in Klartextabschnitte geteilt wird und wobei jeder Klartextabschnitt vor den Schritten des Definierens jeweiliger Anfangswerte jeder der Spuren und des Iterierens des Feistelnetzwerks nicht weiter aufgeteilt wird;
- Definieren jeweiliger Anfangswerte jeder der Spuren auf der Basis jeweiliger entsprechender Klartextabschnitte;
wenn die Größe des Klartextes die vorgegebene Eingabegröße der einen oder der mehreren S-Boxen nicht übersteigt:
- Definieren jeweiliger Anfangswerte jeder der Spuren auf der Basis des Klartextes;
- Iterieren des Feistelnetzwerks für mehrere Male durch Aktualisieren von Spurwerten auf der Basis einer oder mehrerer S-Box-Ausgaben;
- Kombinieren der jeweiligen resultierenden Ausgaben jeder Spur des Feistelnetzwerks, um eine verschlüsselte Version des Klartextes als chiffrierten Text zu erhalten;
und anschließend:
- Erzeugen einer Ausgabedatei, welche die Menge an Daten, die nicht zur Verschlüsselung vorgesehen sind, in ihrem ursprünglichen nichtverschlüsselten Format und den durch Verschlüsselung des mindestens einen Datenobjekts erhaltenen chiffrierten Text aufweist, wobei die Ausgabedatei nicht die unverschlüsselte Version des Datenobjekts umfasst.

14. Verfahren nach Anspruch 13, wobei das mindestens eine Datenobjekt zur Verschlüsselung ein vorgegebenes Format aufweist und wobei das Feistelnetzwerk formatbewahrend ist, derart, dass der chiffrierte Text das gleiche vorgegebene Format aufweist.

15. Verfahren nach Anspruch 13 oder 14, ferner umfassend:
- Identifizieren einer Position des mindestens einen Datenobjekts innerhalb der Eingabedatei;
- Positionieren des chiffrierten Textes in der Ausgabedatei derart, dass der chiffrierte Text in der Ausgabedatei an derselben Position wie der Position des mindestens einen Datenobjekts in der Eingabedatei erscheint.

## Revendications

1. Procédé mis en oeuvre par ordinateur pour réaliser un cryptage de chiffrement par bloc sur la base d'un réseau de Feistel d'un texte en clair, le procédé mettant en oeuvre un algorithme de chiffrement par bloc sur la base de deux pistes ou plus et d'une ou plusieurs boîtes de substitution, le procédé comprenant les étapes suivantes :
- la séparation du texte en clair en parties de texte en clair, dans lequel le nombre de parties de texte en clair est égal au nombre de pistes, dans lequel chaque partie de texte en clair présente une taille de partie, et dans lequel la somme de toutes les tailles de partie est égale à la taille du texte en clair ;
- la définition de valeurs initiales respectives de chacune des pistes sur la base de parties de texte en clair correspondantes respectives ;
- l'itération du réseau de Feistel un nombre de fois par la mise à jour de valeurs de piste sur la base d'une ou plusieurs sorties de boîte de substitution ;
- la combinaison des sorties résultantes respectives de chaque piste du réseau de Feistel pour obtenir une version cryptée du texte en clair sous forme de texte chiffré ;
**caractérisé en ce que**
le chiffrement par bloc est ajustable pour correspondre à la taille du texte en clair, dans lequel la taille du texte en clair détermine le nombre de parties de texte en clair et la taille des parties de texte en clair individuelles ;
la taille de l'entrée pour la boîte de substitution de chaque piste du chiffrement par bloc est au moins égale à la taille de partie de la partie de texte en clair fournie dans la boîte de substitution ; et
dans lequel le texte en clair n'est pas divisé avant l'étape de la séparation du texte en clair en parties de texte en clair, et dans lequel chaque partie de texte en clair n'est pas séparée davantage avant les étapes de la définition de valeurs initiales respectives de chacune des pistes et de l'itération du réseau de Feistel.

2. Procédé selon la revendication 1, dans lequel les parties de texte en clair sont traitées dans les pistes, même si certaines des parties de texte en clair présentent une taille de partie inférieure à la taille de l'entrée pour la boîte de substitution du chiffrement par bloc.

3. Procédé selon l'une quelconque des revendications précédentes, dans lequel au moins deux des deux pistes ou plus présentent des tailles différentes.

4. Procédé selon l'une quelconque des revendications précédentes, dans lequel une sous-clé est en outre fournie dans la boîte de substitution, et dans lequel la sous-clé présente la même taille que l'entrée de sa boîte de substitution correspondante.

5. Procédé selon l'une quelconque des revendications précédentes, dans lequel des valeurs dans les boîtes de substitution sont basées sur des données pseudo-aléatoires générées par au moins un algorithme cryptographique.

6. Procédé selon l'une quelconque des revendications précédentes, dans lequel, dans le réseau de Feistel, les valeurs de piste sont mises à jour par au moins l'une des opérations suivantes :
- ou exclusif,
- addition module et
- soustraction module.

7. Procédé selon l'une quelconque des revendications précédentes, dans lequel au moins deux des itérations du réseau de Feistel sont basées sur différentes boîtes de substitution.

8. Procédé selon l'une quelconque des revendications précédentes, comprenant en outre l'étape de la détermination de tailles de chacune des pistes du réseau de Feistel par la factorisation de la taille du texte en clair, et la distribution des tailles factorisées aux pistes en fonction d'une clé de distribution prédéterminée.

9. Procédé selon l'une quelconque des revendications précédentes, comprenant en outre la génération d'une sous-clé en fonction d'au moins l'une parmi :
- une clé,
- une modification, et
- la taille de texte en clair,
dans lequel la sous-clé est appliquée à l'entrée d'au moins l'une des consultations de boîte de substitution au moyen de l'un des opérandes suivants :
- ou exclusif,
- addition module et
- soustraction module.

10. Procédé selon l'une quelconque des revendications précédentes, comprenant :
- la fourniture d'un fichier d'entrée ;
- l'identification, à l'intérieur du fichier d'entrée, d'au moins un objet de données à crypter et d'une quantité de données à ne pas crypter ;
- la définition de l'au moins un objet de données sous forme dudit texte en clair à crypter selon l'une quelconque des revendications précédentes ;
à la suite de l'étape de la combinaison des sorties résultantes respectives de chaque piste du réseau de Feistel pour obtenir une version cryptée du texte en clair sous forme de texte chiffré :
- la génération d'un fichier de sortie comprenant la quantité de données à ne pas crypter dans leur format non crypté initial et le texte chiffré obtenu par le cryptage de l'au moins un objet de données, dans lequel le fichier de sortie n'inclut pas la version non cryptée de l'au moins un objet de données.

11. Procédé selon la revendication 10, comprenant en outre :
- l'identification d'une position, à l'intérieur du fichier d'entrée, de l'objet de données ;
- le positionnement du texte chiffré dans le fichier de sortie de sorte que le texte chiffré apparaisse à la même position dans le fichier de sortie que la position de l'objet de données dans le fichier d'entrée.

12. Procédé selon l'une quelconque des revendications précédentes, dans lequel le texte en clair présente un format prédéterminé, et dans lequel le procédé est à préservation de format, de sorte que la version cryptée du texte en clair présente le même format prédéterminé.

13. Procédé mis en oeuvre par ordinateur pour crypter un fichier d'entrée par cryptage de chiffrement par bloc sur la base d'un réseau de Feistel d'un texte en clair dérivé du fichier d'entrée, le procédé mettant en oeuvre un algorithme de chiffrement par bloc sur la base de deux pistes ou plus et d'une ou plusieurs boîtes de substitution, dans lequel chacune des boîtes de substitution est configurée pour recevoir une entrée d'une taille d'entrée prédéterminée, le procédé comprenant les étapes suivantes :
- l'identification, à l'intérieur du fichier d'entrée, d'au moins un objet de données à crypter et d'une quantité de données à ne pas crypter ;
- la définition de l'au moins un objet de données sous forme dudit texte en clair à crypter par l'algorithme de chiffrement par bloc ;
- la détermination d'une taille du texte en clair ;
- la détermination si la taille du texte en clair dépasse la taille d'entrée prédéterminée des une ou plusieurs boîtes de substitution ;
si la taille du texte en clair dépasse la taille d'entrée prédéterminée des une ou plusieurs boîtes de substitution :
- la séparation du texte en clair en parties de texte en clair, dans lequel le nombre de parties de texte en clair est égal au nombre de pistes, dans lequel chaque partie de texte en clair présente une taille de partie, et dans lequel la somme de toutes les tailles de partie est égale à la taille du texte en clair, et dans lequel chaque taille de partie est inférieure ou égale à la taille d'entrée prédéterminée des une ou plusieurs boîtes de substitution, et dans lequel le texte en clair n'est pas divisé avant l'étape de la séparation du texte en clair en parties de texte en clair, et dans lequel chaque partie de texte en clair n'est pas séparée davantage avant les étapes de la définition de valeurs initiales respectives de chacune des pistes et de l'itération du réseau de Feistel ;
- la définition de valeurs initiales respectives de chacune des pistes sur la base de parties de texte en clair correspondantes respectives ;
si la taille du texte en clair ne dépasse pas la taille d'entrée prédéterminée des une ou plusieurs boîtes de substitution :
- la définition de valeurs initiales respectives de chacune des pistes sur la base du texte en clair ;
- l'itération du réseau de Feistel un nombre de fois par la mise à jour de valeurs de piste sur la base d'une ou plusieurs sorties de boîte de substitution ;
- la combinaison des sorties résultantes respectives de chaque piste du réseau de Feistel pour obtenir une version cryptée du texte en clair sous forme de texte chiffré ;
et ensuite :
- la génération d'un fichier de sortie comprenant la quantité de données à ne pas crypter dans son format non crypté initial et le texte chiffré obtenu par le cryptage de l'au moins un objet de données, dans lequel le fichier de sortie n'inclut pas la version non cryptée de l'objet de données.

14. Procédé selon la revendication 13, dans lequel l'au moins un objet de données à crypter présente un format prédéterminé, et dans lequel le réseau de Feistel est à préservation de format, de sorte que le texte chiffré présente le même format prédéterminé.

15. Procédé selon la revendication 13 ou 14, comprenant en outre :
- l'identification d'une position, à l'intérieur du fichier d'entrée, de l'au moins un objet de données ;
- le positionnement du texte chiffré dans le fichier de sortie de sorte que le texte chiffré apparaisse à la même position dans le fichier de sortie que la position de l'au moins un objet de données dans le fichier d'entrée.
